(19) **Europäisches Patentamt European Patent Office Office européen des brevets**

(11) **EP 4 550 517 A1**

(12) **EUROPEAN PATENT APPLICATION**
published in accordance with Art. 153(4) EPC

(43) Date of publication:
07.05.2025  Bulletin 2025/19

(21) Application number: 23857335.6

(22) Date of filing: 22.08.2023

(51) International Patent Classification (IPC):
$H01M\ 10/08$ (2006.01)     $H01M\ 4/14$ (2006.01)
$H01M\ 4/62$ (2006.01)     $H01M\ 10/06$ (2006.01)
$H01M\ 10/26$ (2006.01)     $H01M\ 50/414$ (2021.01)
$H01M\ 50/437$ (2021.01)     $H01M\ 50/44$ (2021.01)
$H01M\ 50/449$ (2021.01)     $H01M\ 50/454$ (2021.01)
$H01M\ 50/46$ (2021.01)     $H01M\ 50/489$ (2021.01)

(52) Cooperative Patent Classification (CPC):
H01M 4/14; H01M 4/62; H01M 10/06; H01M 10/08;
H01M 10/26; H01M 50/414; H01M 50/437;
H01M 50/44; H01M 50/449; H01M 50/454;
H01M 50/46; H01M 50/489; Y02E 60/10

(86) International application number:
PCT/JP2023/030110

(87) International publication number:
WO 2024/043226 (29.02.2024 Gazette 2024/09)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority:  26.08.2022  JP 2022135249
27.09.2022  JP 2022153996
04.10.2022  JP 2022160477
24.10.2022  JP 2022169941

(71) Applicant: GS Yuasa International Ltd.
Kisshoin, Minami-ku,
Kyoto-shi, Kyoto 601-8520 (JP)

(72) Inventors:
• ITO Etsuko
  Kosai-shi, Shizuoka 431-0452 (JP)
• YOSHIDA Toshihiro
  Kosai-shi, Shizuoka 431-0452 (JP)
• OGINO Akinari
  Kosai-shi, Shizuoka 431-0452 (JP)
• ANDO Kazunari
  Kosai-shi, Shizuoka 431-0452 (JP)
• NEMORI Kasumi
  Kosai-shi, Shizuoka 431-0452 (JP)

(74) Representative: Isarpatent
Patent- und Rechtsanwälte
Barth Hassa Peckmann & Partner mbB
Friedrichstraße 31
80801 München (DE)

(54) **AQUEOUS ELECTROLYTE SECONDARY BATTERY**

(57)  The aqueous electrolyte secondary battery contains an element and an aqueous electrolyte solution. The element includes a positive electrode plate, a negative electrode plate, and a separator interposed between the positive electrode plate and the negative electrode plate. A chemical oxygen demand in the aqueous electrolyte solution is 5 mg/L or more and 160 mg/L or less.

EP 4 550 517 A1

Fig. 1

**Description**

TECHNICAL FIELD

The present invention relates to an aqueous electrolyte secondary battery.

BACKGROUND ART

The aqueous electrolyte secondary battery is a secondary battery using an aqueous solution as an electrolyte solution. Examples of the aqueous electrolyte secondary battery include a lead-acid battery, a nickel cadmium battery, and a nickel-metal hydride battery.

Lead-acid batteries are in use for various applications, including automotive and industrial applications. The lead-acid battery includes a positive electrode plate, a negative electrode plate, a separator interposed between these electrode plates, and an electrolyte solution. A separator of a lead-acid battery is required to have various performances. As the separator, a porous film made of polyolefin is generally used.

Patent Document 1 proposes a battery separator for reducing float charge, reducing water electrolysis and/or reducing a rate of water loss in a lead-acid battery, the battery separator including at least one additive at a density of at least 5.0 g/m$^2$ and at least one metal salt at a density of at least 1.0 g/m$^2$. Patent Document 1 also proposes a lead-acid battery including such a separator.

Patent Document 2 proposes a lead-acid battery containing 0.5 mg/L or more and 3 mg/L or less of a reducing organic substance in an electrolyte solution.

Patent Document 3 proposes a "separator for a lead-acid battery including a polyolefin microporous membrane, wherein the polyolefin microporous membrane includes: polyethylene, preferably, ultrahigh molecular weight polyethylene, a particle-like filler, and a processing plasticizer, the particle-like filler is present in an amount of 40% or more by weight; the polyethylene includes polymer in a shish-kebab formation including a plurality of extended chain crystals (the shish formations) and a plurality of folded chain crystals (the kebab formations) and wherein the average repetition or periodicity of the kebab formations is from 1 nm to 150 nm, preferably less than 120 nm".

Patent Document 4 proposes a "ribbed separator for a lead-acid battery in which a difference in oil content between a rib and a base of the separator is 5% by mass or less, in the ribbed separator for the lead-acid battery containing 5 to 30% by mass of the oil that is obtained by heating and melting a raw material composition including a mixture of 20 to 60% by mass of a polyolefin-based resin, 80 to 40% by mass of an inorganic powder, and 40 to 240% by mass of a mineral oil based on a blend thereof, molding the raw material composition into a ribbed sheet shape while mixing the raw material composition, immersing the raw material composition in an immersion tank of an organic solvent capable of dissolving the oil to extract and remove a part of the oil, and heating and drying the raw material composition".

Patent Document 5 proposes a "lead-acid battery including a positive electrode plate, a negative electrode plate, an electrolyte solution, and a separator, wherein the separator includes a porous sheet and a glass mat, and the electrolyte solution contains aluminum ions in an amount of 0.02 mol/L or more and 0.2 mol/L or less and lithium ions in an amount of 0.02 mol/L or more and 0.2 mol/L or less".

Patent Document 6 proposes a "flooded-type lead-acid battery including: a positive electrode plate; a negative electrode plate; a separator disposed between the positive electrode plate and the negative electrode plate; a membrane disposed between the negative electrode plate and the separator; an electrolyte solution; and a container that stores the positive electrode plate, the negative electrode plate, the separator, the membrane, and the electrolyte solution, wherein the membrane has pores with an average pore diameter of 15 μm or less, and is used such that a ratio of a residual capacity to a full charge electricity is 90% or less".

Patent Document 7 proposes a "method for producing a flooded-type lead-acid battery including: a step of providing a container divided into two or more regions by one or a plurality of partition walls; a step of providing two or more elements each including a plurality of positive electrode plates, a plurality of polyolefin separators, a plurality of nonwoven fabrics, and a plurality of negative electrode plates; a step of storing the elements in the regions of the container; and a step of supplying an electrolyte solution in the container, wherein when the element is stored in the region of the container, the element is pressed into the region while a compressive force in a thickness direction of the element is applied to the element from the partition wall, and when a width of the region is represented by X mm and a thickness of the element when the element is taken out from the battery after formation is represented by Y mm, X and Y satisfy -1.1 ≤ X-Y ≤ 1.2".

Patent Document 8 proposes "a lead-acid battery including: an element in which a plurality of positive electrode plates each having a positive active material containing lead dioxide and a plurality of negative electrode plates each having a negative active material containing metal lead are alternately stacked with a separator interposed therebetween, wherein the element is immersed in an electrolyte solution to form a cell, the positive electrode plate after formation has a flatness of 4.0 mm or less, and a content of bismuth in the negative active material is 0.5 ppm or more and 250 ppm or less".

Patent Document 9 proposes a "lead-acid battery including: a negative electrode plate including a negative grid not containing Sb; a positive electrode plate including a positive grid not containing Sb and having a layer containing Sb in an amount of 0.01 to 0.20% by weight of a positive active material amount on at least a part of a surface in contact with the positive active material; and a separator inserted in between the positive electrode plate and the negative electrode plate, in which the entire surfaces of the positive electrode plate and the negative electrode plate are immersed in an electrolyte solution, and the negative active material contains Bi in an amount of 0.02 to 0.10% by weight with respect to a negative active material amount".

Patent Document 10 proposes "a lead-acid battery including a negative electrode plate including a non-Sb-based negative electrode grid and a negative active material containing 0.1 to 3% by weight of Ba and 0.1 to 2.5% by weight of graphite or carbon, wherein the negative active material contains at least one selected from the group of Sb, Sn, Bi, Zn, Se, Mn, Ca, Mg, and Sr".

PRIOR ART DOCUMENT

PATENT DOCUMENTS

Patent Document 1: WO 2017/143212 A (claims 1 and 23)
Patent Document 2: JP-A-2005-251394
Patent Document 3: JP-W-2019-514173
Patent Document 4: JP-A-2001-338631
Patent Document 5: JP-A-2013-84362
Patent Document 6: WO 2018-105134 A
Patent Document 7: JP-A-2020-174058
Patent Document 8: JP-A-2021-163612
Patent Document 9: JP-A-2006-079973
Patent Document 10: JP-A-2003-142085

SUMMARY OF THE INVENTION

PROBLEMS TO BE SOLVED BY THE INVENTION

In the aqueous electrolyte secondary battery, it is required to enhance charge acceptability. In general, the charge acceptability can be increased by increasing reaction areas of the positive electrode plate and the negative electrode plate, increasing the temperature of the aqueous electrolyte secondary battery, or decreasing a specific gravity of the electrolyte solution. However, in order to adopt these methods, a battery design must be greatly changed, and there is a problem that it is necessary to control various factors in relation to the battery design.

MEANS FOR SOLVING THE PROBLEMS

One aspect of the present disclosure relates to an aqueous electrolyte secondary battery including: an element; and an aqueous electrolyte solution, in which the element includes a positive electrode plate, a negative electrode plate, and a separator interposed between the positive electrode plate and the negative electrode plate, and a chemical oxygen demand in the aqueous electrolyte solution is 5 mg/L or more and 160 mg/L or less.

ADVANTAGES OF THE INVENTION

In the aqueous electrolyte secondary battery, charge acceptability can be improved.

BRIEF DESCRIPTION OF THE DRAWINGS

Fig. 1 is a partially cutaway perspective view showing an appearance and an internal structure of an aqueous electrolyte secondary battery according to an embodiment of the present invention.
Fig. 2 is a schematic plan view of a separator of Fig. 1.

MODE FOR CARRYING OUT THE INVENTION

In an aqueous electrolyte secondary battery, an electrolyte solution contains a certain amount of organic components at an initial stage. The organic component is believed to be derived from a constituent element of the battery. Examples of the constituent element of the battery serving as an organic component source include an additive of an electrolyte solution, a separator, and an electrode. The organic component derived from the separator or the electrode is considered to be contained in the electrolyte solution by, for example, elution of an additive contained in the separator or the electrode, or elution of a component adhering to the separator, the electrode, or the like in a manufacturing process. Examples of the component adhering to the separator, the electrode, or the like in the manufacturing process include cutting oil and a mold release agent.

The present inventors have found that in the aqueous electrolyte secondary battery, when a certain amount of the organic component is contained in the electrolyte solution, charge acceptability is lowered. The lowering of the charge acceptability is probably due to the following reasons. In the aqueous electrolyte secondary battery, during charging, a charge reaction occurs in each of the positive electrode plate and the negative electrode plate, and a charge current flows between the positive electrode plate and the negative electrode plate. However, when the organic component is present in the electrolyte solution, it is presumed that a side reaction due to oxidation of the organic component and the like occurs. As a result, it is considered that the charge current hardly flows, and the charge acceptability is lowered.

In view of the above, (1) an aqueous electrolyte secondary battery according to one aspect of the present invention includes an element and an aqueous electrolyte solution. The element includes a positive electrode plate, a negative electrode plate, and a separator interposed between the positive electrode plate and the negative electrode plate. A chemical oxygen demand (COD) in the aqueous electrolyte solution is 5 mg/L or more and 160 mg/L or less.

COD is an amount of oxygen required to oxidize an oxidisable material in water. The COD in the aqueous electrolyte solution can be said to be an index of the concentration of the organic component contained in the aqueous electrolyte solution. In the present specification, the COD is COD in an aqueous electrolyte solution collected from an aqueous electrolyte secondary battery in a full charge state at an initial stage of use. The battery at the initial stage of use refers to a battery that has not been used for a long time after the start of use and has hardly degraded.

In the above aspect of the present invention, the COD in the aqueous electrolyte solution of the aqueous electrolyte secondary battery is set to 5 mg/L or more and 160 mg/L or less. As a result, as compared with a case where the COD in the aqueous electrolyte solution is less than 5 mg/L and a case where the COD in the aqueous electrolyte solution is more than 160 mg/L, the charge current easily flows between the positive electrode plate and the negative electrode plate, and the charge acceptability is greatly improved. This is considered to be because when the concentration of the organic component in the aqueous electrolyte solution is within the above range, a side reaction which is a decomposition reaction of the organic component is suppressed. Specifically, when the COD in the aqueous electrolyte solution is 5 mg/L or more, the decomposition reaction of the organic component on a surface of the positive electrode plate occurs in preference to an oxidation reaction of the separator, so that the oxidation degradation of the separator is reduced. As a result, an internal short-circuit associated with oxidation degradation of the separator is suppressed, and higher life performance is obtained. It is considered that when the COD in the aqueous electrolyte solution is 160 mg/L or less, a side reaction in which an organic substance in the electrolyte solution is oxidized or reductively decomposed on a surface of an electrode plate is suppressed.

For example, Fig. 5 of Patent Document 1 describes that the CODs of batteries A, B, and D are 20,031 mg/L, 5,920 mg/L, and 13,004 mg/L, respectively. Although these numerical values and the fact that the COD in the aqueous electrolyte solution in the present disclosure is 160 mg/L or less cannot be definitely compared, it can be said that the COD in the battery of Patent Document 1 is a considerably large value.

(2) In (1) above, the COD in the aqueous electrolyte solution may be 130 mg/L or less. In this case, higher charge acceptability can be secured.

(3) In (1) or (2) above, the COD in the aqueous electrolyte solution may be 8 mg/L or more. In this case, higher charge acceptability can be secured.

(4) In any one of (1) to (3) above, the aqueous electrolyte secondary battery may be a lead-acid battery. Examples of the aqueous electrolyte secondary battery include a lead-acid battery, a nickel-metal hydride battery, and a nickel-cadmium battery. Among the aqueous electrolyte secondary batteries, the lead-acid battery has the highest positive electrode potential. Thus, the organic component is easily oxidized and decomposed on the surface of the positive electrode plate, and the side reaction easily progresses. In the present disclosure, even in such a lead-acid battery, high charge acceptability can be secured.

Although the lead-acid battery may be a valve regulated lead-acid battery (also referred to as a sealed battery), a flooded-type lead-acid battery (vent type battery) is preferable in that the action and effect due to reduction in COD can be effectively utilized. The valve regulated lead-acid battery is also referred to as a VRLA.

(5) In (4) above, the negative electrode plate may contain at least one selected from the group consisting of an organic expander and a carbonaceous material. When the negative electrode plate contains at least one selected from the group consisting of the organic expander and the carbonaceous material, high charge acceptability tends to be obtained. However, when the negative electrode plate contains at least one selected from the group consisting of the organic expander and the carbonaceous material, the COD in the electrolyte solution may be higher than that when the negative electrode plate does not contain any substance, and this may affect the charge acceptability. Even in such a case, in the aqueous electrolyte secondary battery according to the above aspect of the present invention, the COD in the electrolyte solution is in a specific range, and the negative electrode plate contains at least one selected from the group consisting of the organic expander and the carbonaceous material, so that higher charge acceptability can be secured.

(6) In (4) or (5) above, the element may include a fiber mat interposed between the positive electrode plate and the negative electrode plate. When the element includes the fiber mat, as compared with a case where the element does not include the fiber mat, the internal resistance of the battery tends to increase, and the charge acceptability tends to be lowered. Even in such a case, in the aqueous electrolyte secondary battery according to the above aspect of the present invention, high charge acceptability can be secured because the COD in the electrolyte solution falls within a specific range.

The present inventors have found that the charge acceptability is improved by reducing the chemical oxygen demand (COD), which is an index of the concentration of the organic component in the electrolyte solution, as described above.

However, the present inventors have newly found that in the lead-acid battery, when the charge acceptability is increased by decreasing the amount of the organic component in the electrolyte solution, the life tends to be shortened in a test of a high-temperature overcharged state as a contradiction. For example, in a light load life test (for example, 75°C JIS light load life test (2 min method)), since the test condition is that a charge electricity is larger than a discharge capacity, the lead-acid battery is in an overcharged state during the test, hydrogen is generated on the negative electrode by decomposition of the electrolyte solution, and oxygen is generated on the positive electrode. When the amount of the organic component is reduced in the light load life test, the lead-acid battery tends to be further overcharged due to improvement in charge acceptability.

Oxygen generated on the positive electrode attacks a constituent material of the separator to cause oxidation degradation of the separator. Thus, cracks or breaks occur in the separator, and the positive electrode material and the negative electrode material come into contact with each other at a damaged portion of the separator, so that a short circuit occurs, leading to an end of life.

(7) In any one of (4) to (6) above, the separator may include a resin porous film, the porous film may include a crystalline region and an amorphous region, and in an X-ray diffraction spectrum of the porous film, a degree of crystallinity represented by $100 \times I_c/(I_c + I_a)$ may be 18% or more. Here, $I_c$ is the integrated intensity of the diffraction peak having the maximum peak height among the diffraction peaks corresponding to the crystalline region, and $I_a$ is the integrated intensity of the halo corresponding to the amorphous region.

The aqueous electrolyte secondary battery (lead-acid battery) according to (7) above has excellent charge acceptability and excellent life performance in the test in the high-temperature overcharged state.

(8) In the aqueous electrolyte secondary battery (lead-acid battery) according to (7) above, the chemical oxygen demand may be 15 mg/L or more.

The aqueous electrolyte secondary battery (lead-acid battery) according to (8) above is more unlikely to degrade in life performance in the test in the high-temperature overcharged state.

(9) In the aqueous electrolyte secondary battery (lead-acid battery) according to (7) or (8) above, the degree of crystallinity may be 40% or less.

The porous film included in the aqueous electrolyte secondary battery (lead-acid battery) according to (9) above is not only excellent in flexibility but also easy to be produced.

The porous film included in the aqueous electrolyte secondary battery (lead-acid battery) according to the present disclosure may include a crystalline region and an amorphous region. In the X-ray diffraction spectrum of the separator, the degree of crystallinity represented by $100 \times I_c/(I_c + I_a)$ may be 18% or more. However, $I_c$ is an integrated intensity of a diffraction peak having the maximum peak height among diffraction peaks corresponding to the crystalline region. $I_a$ is the integrated intensity of a halo corresponding to the amorphous region.

By reducing the COD in the electrolyte solution, side reactions due to oxidation of the organic component and the like are reduced, and the charge reaction of the positive active material and the negative active material easily progresses, so that the charge acceptability of the aqueous electrolyte secondary battery (lead-acid battery) is improved. When the COD in the electrolyte solution is 160 mg/L or less, the charge acceptability is remarkably improved.

On the other hand, when the charge acceptability increases, as a contradiction, the life tends to be shortened in the test of the high-temperature overcharged state. The reason for this is presumed as follows. When the lead-acid battery is more likely to be overcharged due to high charge acceptability, the amounts of hydrogen and oxygen generated by decomposition of the electrolyte solution increase. A large amount of oxygen generated on the positive electrode attacks the porous film. As a result, the porous film is oxidized and degraded, so that cracks or breaks occur, and an internal short-circuit occurs, leading to an end of life.

6

On the other hand, it has been found that when the degree of crystallinity of the porous film is 18% or more, even when the COD in the electrolyte solution is reduced to 160 mg/L or less to improve the charge acceptability, deterioration of the life performance in the test in the high-temperature overcharged state is remarkably suppressed. This is because oxidation resistance of the porous film is remarkably improved when the degree of crystallinity increases to some extent. As a result, a period until cracks or breaks of the porous film occur is lengthened, and the life performance is improved.

In addition, when the degree of crystallinity of the porous film is increased to 23% or more, the life performance in the test in the high-temperature overcharged state when the COD in the electrolyte solution is reduced to 160 mg/L or less is remarkably improved. This is because the period until cracks or breaks of the porous film occur is further lengthened, and the life is rarely reached due to degradation of the porous film.

A ratio of the mass of the positive electrode material to the mass of the negative electrode material (hereinafter, the ratio is also referred to as the "Mp/Mn ratio") is, for example, 1.2 or more and may be 1.3 or more. The Mp/Mn ratio may be 1.4 or less. A preferable range of the Mp/Mn ratio is, for example, 1.2 or more and 1.4 or less, and may be 1.3 or more and 1.4 or less. The mass of the positive electrode material is the mass of the positive electrode material included in one positive electrode plate. The mass of the negative electrode material is the mass of the negative electrode material included in one negative electrode plate. Increasing the Mp/Mn ratio to 1.2 or more means reducing an amount of the negative electrode material used. In other words, the weight of the lead-acid battery can be reduced by increasing the Mp/Mn ratio to 1.2 or more, and the cost can be reduced. When the Mp/Mn ratio is 1.2 or more, the load on the positive electrode plate can be reduced, so that softening and falling off of the positive electrode plate can be easily suppressed.

An aqueous electrolyte secondary battery (lead-acid battery) for vehicles is required to secure excellent life performance (heavy load life performance) in a heavy load life test. In the heavy load life test, after the lead-acid battery is deeply discharged with a large current, the charge electricity in substantially the same amount as the discharge capacity is charged. Thus, in order to obtain excellent heavy load life performance, it is important to suppress side reactions. When a part of the charge electricity is consumed in the side reaction, a poor charged state is provided. In this case, since a depth of discharge of the aqueous electrolyte secondary battery (lead-acid battery) becomes deeper, the positive electrode material is gradually softened and falls off from the positive electrode plate to reach the life. In particular, the tendency is large in a commercial vehicle with a relatively large vibration such as a truck or a taxi.

Meanwhile, when a nonwoven fabric interposed between the positive electrode plate and the negative electrode plate and in contact with the positive electrode plate is provided, it is possible to reduce falling off of the softened positive electrode material.

However, when the nonwoven fabric is provided between the positive electrode plate and the negative electrode plate, a physical barrier against ion conduction in the electrolyte solution increases, and resistance increases, so that cold cranking ampere (CCA) performance is lowered.

As described above, in a state in which a certain degree of side reaction may occur, it is difficult to secure excellent heavy load life performance while securing high CCA performance. On the other hand, in recent years, an aqueous electrolyte secondary battery (lead-acid battery) having more excellent heavy load life performance and CCA performance has been required in order to be applied to a vehicle equipped with an idling stop function and a micro hybrid vehicle.

(10) In the aqueous electrolyte secondary battery (lead-acid battery) according to any one of (4) to (9) above, the separator may include a resin porous film and a nonwoven fabric in contact with the positive electrode plate.

The aqueous electrolyte secondary battery (lead-acid battery) according to (10) above has high CCA performance and excellent heavy load life performance. This is considered to be because by adjusting the COD in the electrolyte solution, a decrease in a bonding force between the positive electrode current collector and the positive electrode material due to the progress of softening of the positive electrode material by deep discharge is suppressed. When the nonwoven fabric is used, although falling off of the positive electrode material can be reduced, softening itself of the positive electrode material by deep discharge progresses. On the other hand, it is considered that when the COD is 160 mg/L or less, the charge acceptability is improved, so that the depth of discharge does not become excessively deep, the softening of the positive electrode material hardly progresses, an increase in resistance due to the decrease in the bonding force between the positive electrode current collector and the positive electrode material is suppressed, and an influence of the increase in resistance due to the nonwoven fabric is hardly reflected in the CCA performance.

The organic substance in the electrolyte solution not only lowers the charge acceptability by oxidization and decomposition on the surface of the positive electrode plate, but also affects both the charge and discharge reactions by inhibiting ion conduction in the electrolyte solution. When the COD in the electrolyte solution is more than 160 mg/L, the ion conduction in the electrolyte solution is inhibited, and a discharge reaction is inhibited, so that the CCA performance is lowered. On the other hand, when the COD in the electrolyte solution is reduced to 160 mg/L or less, the ion conduction is hardly inhibited, so that high CCA performance can be obtained. Such an effect of improving the CCA performance by reducing the COD is effectively exhibited even when the nonwoven fabric is interposed between the positive electrode plate and the negative electrode plate in addition to the porous film. From the above, it is possible to obtain a lead-acid battery having both high CCA performance and heavy load life performance by interposing the porous film and the nonwoven fabric between the positive electrode plate and the negative electrode plate and setting the COD in the electrolyte solution to a certain range or less.

(11) In the aqueous electrolyte secondary battery (lead-acid battery) according to (10) above, the nonwoven fabric may be a mat including at least one selected from the group consisting of glass fibers and organic fibers.

In the aqueous electrolyte secondary battery (lead-acid battery) according to (11) above, glass fibers are excellent in oxidation resistance, and organic fibers are excellent in flexibility and adhesion to the positive electrode material, so that the effect of suppressing falling off of the softened positive electrode material is large.

(12) In the aqueous electrolyte secondary battery (lead-acid battery) according to (4) to (11) above, the COD may be 100 mg/L or less.

In the aqueous electrolyte secondary battery (lead-acid battery) according to (12) above, since the discharge performance is remarkably improved, higher CCA performance and more excellent heavy load life performance can be obtained. With such a configuration, the charge acceptability is more excellent, and the life performance in the test in the high-temperature overcharged state is less likely to degrade.

(13) In the aqueous electrolyte secondary battery (lead-acid battery) according to any one of (10) to (12) above, the nonwoven fabric may be fixed to the surface of the positive electrode plate.

In the lead-acid battery according to (13) above, since the positive electrode plate and the nonwoven fabric are integrated, the effect of suppressing falling off of the softened positive electrode material is large. Since a surface area of the positive electrode plate covered with the nonwoven fabric increases, the effect of improving the discharge performance by reducing the COD is remarkably exhibited.

(14) In the aqueous electrolyte secondary battery (lead-acid battery) according to any one of (7) to (13) above, the porous film may have a thickness of 100 $\mu$m or more and 300 $\mu$m or less.

In the aqueous electrolyte secondary battery (lead-acid battery) according to (14) above, since the porous film is sufficiently thin and has high strength, higher charge acceptability and more excellent life performance in the test in the high-temperature overcharged state can be obtained. In addition, higher CCA performance and more excellent heavy load life performance can be obtained.

(15) In the aqueous electrolyte secondary battery (lead-acid battery) according to any one of (10) to (14) above, the nonwoven fabric may have a thickness of 30 $\mu$m or more and 800 $\mu$m or less.

In the lead-acid battery according to (15) above, since the nonwoven fabric is sufficiently thin and has high strength, higher CCA performance and more excellent heavy load life performance can be obtained.

(16) In the aqueous electrolyte secondary battery (lead-acid battery) according to any one of (10) to (15) above, the porous film may have a region not covered with the nonwoven fabric at least at a part of an end.

According to the aqueous electrolyte secondary battery (lead-acid battery) according to (16) above, a size of the nonwoven fabric can be set to a size sufficient to suppress falling off of the softened positive electrode material while suppressing an increase in internal resistance.

Interposing the porous film and the nonwoven fabric between the positive electrode plate and the negative electrode plate is effective in suppressing falling off of the softened positive electrode material. However, the inventors have found that when the COD in the electrolyte solution exceeds a certain range, a degree of improvement of the heavy load life performance by adopting the nonwoven fabric is limited.

When the chemical oxygen demand (COD) in the electrolyte solution exceeds a predetermined range regardless of the presence or absence of the nonwoven fabric, a side reaction in which the organic substance in the electrolyte solution is oxidized and decomposed on the surface of the positive electrode plate occurs, so that the charge acceptability of the positive electrode plate is lowered. Meanwhile, in the heavy load life test, since the discharge capacity is large (for example, DOD: 20% to 50%) during discharging, softening of the positive electrode material by deep discharge progresses, the bonding force between the positive electrode current collector and the positive electrode material decreases, and the resistance increases. The nonwoven fabric can reduce falling off of the positive electrode material, but cannot suppress softening itself.

On the other hand, when the COD in the electrolytic solution is controlled to 160 mg/L or less, the concentration of the organic substance in the electrolyte solution is reduced. Thus, a ratio of the side reaction to the charge reaction of the active material decreases, and softening of the positive electrode material due to the poor charged state hardly progresses.

As the COD in the electrolyte solution decreases, the concentration of the organic substance in the electrolyte solution decreases, and an amount of side reaction during charging decreases. Thus, it is assumed that charge efficiency is improved and the life in the heavy load life test becomes longer as the COD in the electrolyte solution is smaller. However, in practice, since the amount of charge increases, oxygen generated on the positive electrode causes oxidation degradation of the resin porous film, so that the heavy load life is not necessarily improved, and may be rather reduced. The oxidized and degraded porous film is cracked or broken, causing an internal short-circuit between the positive electrode and the negative electrode, and the lead-acid battery reaches its life.

Meanwhile, by disposing a nonwoven fabric between the positive electrode plate and the negative electrode plate and bringing the nonwoven fabric into contact with the positive electrode plate, oxidation degradation of the porous film due to oxygen generated in the vicinity of the positive electrode plate can be suppressed. By bringing the nonwoven fabric into contact with the positive electrode plate, it is also possible to suppress softening and falling off of the positive electrode material in an overcharged state or an overdischarged state. This point also contributes to improvement of the heavy load life performance.

In the present specification, the heavy load life performance is life performance when discharging and charging are repeated up to a region where a depth of one discharge is 20% or more (this region is also referred to as a heavy load region) when the rated capacity (5-hour rate capacity) is 100%. Details of the test conditions of the heavy load life performance will be described later.

The nonwoven fabric may be in contact with the surface of the positive electrode plate, but may be fixed to the surface of the positive electrode plate. By fixing the nonwoven fabric to the surface of the positive electrode plate and integrating the positive electrode plate and the nonwoven fabric, the effect of suppressing falling off of the softened positive electrode material becomes large. In this case, since the surface area of the positive electrode plate covered with the nonwoven fabric increases, the heavy load life performance is strongly affected by the value of COD. Thus, the effect of improving the heavy load life performance by reducing the COD is more remarkably exhibited. A method for fixing the nonwoven fabric to the surface of the positive electrode plate is not particularly limited, and examples thereof include a method in which the nonwoven fabric is pressed and stuck to the surface of the positive electrode plate in an unformed state, and then the nonwoven fabric is formed to be fixed.

A ratio of the mass of the positive electrode material to the mass of the negative electrode material (hereinafter, the ratio is also referred to as the "Mp/Mn ratio") is, for example, 1.2 or more and may be 1.3 or more. The Mp/Mn ratio may be 1.4 or less. A preferable range of the Mp/Mn ratio is, for example, 1.2 or more and 1.4 or less, and may be 1.3 or more and 1.4 or less. The mass of the positive electrode material is the mass of the positive electrode material included in one positive electrode plate. The mass of the negative electrode material is the mass of the negative electrode material included in one negative electrode plate. Increasing the Mp/Mn ratio to 1.2 or more means reducing an amount of the negative electrode material used. In other words, the weight of the lead-acid battery can be reduced by increasing the Mp/Mn ratio to 1.2 or more, and the cost can be reduced. When the Mp/Mn ratio is 1.2 or more, the load on the positive electrode plate can be reduced, so that softening and falling off of the positive electrode plate can be easily suppressed.

The aqueous electrolyte secondary battery (lead-acid battery) according to the present disclosure is suitable for a vehicle controlled by idling stop/start (ISS). Since the lead-acid battery mounted on a vehicle controlled by ISS is discharged to deep DOD, the effect of suppressing falling off of the positive electrode material by using the nonwoven fabric and the effect of improving the CCA performance by controlling the COD are more remarkably exhibited.

Recent lead-acid batteries, particularly, lead-acid batteries for vehicles controlled by idling stop/start (ISS) are used under conditions different from those of conventional lead-acid batteries. Such lead-acid batteries are used, for example, in a partial state of charge (PSOC). When the lead-acid battery is continuously discharged without being charged from the PSOC while an engine is stopped, the depth of discharge (hereinafter, referred to as "DOD") becomes deeper. In recent years, vehicles controlled by ISS are increasing also in delivery vehicles such as a taxi, a bus, and a home delivery service. These commercial ISS vehicles have longer engine downtime than owner's car ISS vehicles. That is, in the commercial ISS vehicle, an electrical load is large, and the discharge capacity from the lead-acid battery is large. In order to cope with such an increase in load, conditions of a charge-discharge cycle test are becoming stricter than before. Thus, it is required to improve the life in the charge-discharge cycle test (heavy load life test) assuming use at deep DOD (for example, 20% to 50%).

One of the factors of degradation of the lead-acid battery due to use at deep DOD is deterioration of the charge acceptability of the negative electrode material, an increase in impedance due to formation of a high-resistance layer at a positive electrode material/positive grid interface, and the like.

When Bi is added to the negative electrode material, although the charge acceptability of the negative electrode is improved, it may be difficult to sufficiently improve the life in the heavy load life test only by this.

(17) In the aqueous electrolyte secondary battery (lead-acid battery) according to any one of (4) to (16) above, the positive electrode plate may contain a positive electrode material, the negative electrode plate may contain a negative electrode material, the negative electrode material may contain a Bi element, and a content of the Bi element in the negative electrode material may be 100 ppm or more and 300 ppm or less on a mass basis. The lead-acid battery according to (17) above shows an excellent life in the heavy load life test.

(18) In the lead-acid battery according to (17) above, the COD in the aqueous electrolyte solution may be 120 mg/L or less. According to the lead-acid battery according to (18) above, a more excellent life is obtained in the heavy load life test.

(19) In the lead-acid battery according to any one of (4) to (18) above, a ratio of a mass of the positive electrode material to a mass of the negative electrode material may be 1.2 or more and 1.4 or less. The lead-acid battery according to (19) above can not only obtain an excellent life in the heavy load life test, but also reduce a use amount of the negative electrode material, and is suitable for weight reduction and cost reduction.

(20) The lead-acid battery according to any one of (4) to (19) above may be used for a vehicle controlled by ISS. In recent years, the number of vehicles controlled by ISS is increasing also in delivery vehicles such as a taxi, a bus, and a home delivery service, and the lead-acid batteries mounted on these vehicles have a great need to improve the life in the heavy load life test.

In general, in a cycle test in which discharging is performed to deep DOD, unevenness of reaction is likely to occur in an up-down direction. This is because, during discharging, the negative electrode plate is likely to be discharged relatively uniformly as a whole, and during charging, the poor charged state tends to be provided due to the charging conditions (charge voltage, charging time). In the charging from the time of deep discharge, a reaction of $PbSO_4 + 2e^- \rightarrow Pb + SO_4^{2-}$ and a reaction of $2H^+ + 2e^- \rightarrow H_2$ competitively progress at an upper portion of the negative electrode plate, so that the number of electrons that can be supplied to a lower portion of the negative electrode plate decreases. Thus, the upper portion of the negative electrode plate which is likely to be collected is selectively charged, and the lower portion of the negative electrode plate is less likely to be charged. That is, lead sulfate is likely to remain at the lower portion of the negative electrode plate. When the same charging and discharging are repeated, lead sulfate accumulates in the lower portion of the negative electrode plate, and unevenness of the reaction in the up-down direction of the negative electrode plate occurs. When Bi is contained in the negative electrode material, the upper portion of the negative electrode plate is more easily charged due to improvement in charge acceptability caused by an action of reducing hydrogen generation overvoltage by the Bi element and the like. Meanwhile, in the lower portion of the negative electrode plate, the effect of improving the charge acceptability by the addition of the Bi element is limited. That is, the unevenness of the reaction in the up-down direction of the negative electrode plate becomes more remarkable when the Bi element is added.

Meanwhile, when the chemical oxygen demand (COD) in the electrolyte solution exceeds a predetermined range, the side reaction in which the organic substance in the electrolyte solution is oxidized and decomposed on the surface of the positive electrode plate occurs, so that the charge acceptability of the positive electrode plate is lowered, and the charge acceptability of the negative electrode plate facing the positive electrode plate also tends to be lowered. Thus, in the heavy load life test in which discharging is performed to deep DOD, unevenness of reaction is likely to occur in the up-down direction. This is because since the discharge capacity is large (for example, DOD: 20% to 50%) during discharging, the positive and negative electrode plates are easily discharged relatively uniformly as a whole, during charging, however, the positive and negative electrode plates are charged with the charge electricity in substantially the same amount as the discharge capacity. Thus, the charge electricity is consumed by a side reaction due to decomposition of an organic substance, and the poor charged state tends to be provided. In particular, since a density of the organic substance is smaller than a density of the electrolyte solution, this side reaction is remarkably observed at an upper portion of the electrode plate where the concentration of the organic substance is relatively large.

On the other hand, when the COD in the electrolyte solution is controlled to 160 mg/L or less, the concentration of the organic substance in the electrolyte solution is reduced, so that the ratio of the side reaction to the charge reaction is reduced, and unevenness of reaction due to the poor charged state is less likely to occur.

As the COD in the electrolyte solution decreases, the concentration of the organic substance in the electrolyte solution decreases, and an amount of side reaction during charging decreases. Thus, it is assumed that charge efficiency is improved and the life in the heavy load life test becomes longer as the COD in the electrolyte solution is smaller. However, in practice, when the charge efficiency is excessively improved, the charge reaction tends to locally progress. Specifically, since the charge reaction easily progresses at the upper portions of the positive electrode plate and the negative electrode plate, the upper portions of these plates are selectively charged, and the lower portions of the electrode plates are less likely to be charged. Thus, the upper portion of the positive electrode plate is likely to be in an overcharged state, and degradation of the positive electrode material and corrosion of the positive electrode current collector are likely to progress. That is, not the poor charged state of the negative electrode plate but unevenness of the reaction of the positive electrode plate due to overcharge progresses. In order to suppress such unevenness of the reaction and achieve a longer life, it is preferable to control the COD in the electrolyte solution to 1 mg/L or more. In other words, it is possible to remarkably improve the life in the heavy load life test by controlling not only the content of the Bi element in the negative electrode material but also the COD in the electrolyte solution.

The content of the Bi element in the negative electrode material needs to be limited to 100 ppm or more and 300 ppm or less on a mass basis. Although the detailed mechanism has not been sufficiently clarified, when the content of the Bi element is less than 100 ppm on a mass basis, the Bi element is not affected by the COD, and sufficient heavy load life performance cannot be obtained as shown in Examples described later. This is presumed to be because the upper portion of the negative electrode plate, which is easily charged, is selectively charged, and the upper portion of the positive electrode plate, which faces the upper portion of the negative electrode plate, is also selectively charged, so that there is a tendency that the charge reaction is likely to be uneven in the up-down direction of the electrode plate. However, when the content of the Bi element is 100 ppm to 300 ppm on a mass basis and the COD is 5 mg/L to 160 mg/L, due to the oxidation reaction of the organic substance at the upper portion of the positive electrode plate, the selective charge reaction at the upper portion of the positive and negative electrode plates can be suppressed, and the entire plate is relatively uniformly charged.

When the content of the Bi element in the negative electrode material is more than 300 ppm, even if the COD in the electrolyte solution is sufficiently reduced, a decomposition reaction (side reaction) of the electrolyte solution is likely to occur in the entire negative electrode plate, and the poor charged state tends to be provided. Meanwhile, in the positive electrode plate, since the charge reaction is concentrated at the upper portion of the electrode plate which is likely to be charged, the degradation of the positive electrode material and the corrosion of the positive electrode current collector progress at the upper portion of the positive electrode plate. On the other hand, when the content of the Bi element in the negative electrode material is excessively increased and the COD in the electrolyte solution is excessive, the decomposition reaction of the electrolyte solution on the negative electrode plate and the decomposition reaction of the organic substance on the positive electrode plate progress during charging, so that a difference between the discharge capacity during discharging and the charge electricity during charging becomes more remarkable, leading to an extreme poor charged state at an early stage.

The content of the Bi element in the negative electrode material may be 100 ppm or more or 150 ppm or more on a mass basis. The content of the Bi element in the negative electrode material may be 250 ppm or less or 230 ppm or less on a mass basis. A preferable range of the content of the Bi element in the negative electrode material may be, for example, 100 ppm or more and 250 ppm or less, or 150 ppm or more and 230 ppm or less on a mass basis.

A ratio of the mass of the positive electrode material to the mass of the negative electrode material (hereinafter, the ratio is also referred to as the "Mp/Mn ratio") is, for example, 1.2 or more and may be 1.3 or more. The Mp/Mn ratio may be 1.4 or less. A preferable range of the Mp/Mn ratio is, for example, 1.2 or more and 1.4 or less, and may be 1.3 or more and 1.4 or less. The mass of the positive electrode material is the mass of the positive electrode material included in one positive electrode plate. The mass of the negative electrode material is the mass of the negative electrode material included in one negative electrode plate. Increasing the Mp/Mn ratio to 1.2 or more means reducing an amount of the negative electrode material used. In other words, the weight of the lead-acid battery can be reduced by increasing the Mp/Mn ratio to 1.2 or more, and the cost can be reduced.

On the other hand, when the Mp/Mn ratio is 1.2 or more, the load on the negative electrode plate considerably increases, and the charge acceptability is likely to be lowered. In the present embodiment, since the negative electrode material contains a predetermined amount of Bi element, the charge acceptability of the negative electrode plate is improved; therefore, sulfation of the negative electrode plate is less likely to progress even when the Mp/Mn ratio is increased to 1.2 or more, and the heavy load life performance is less likely to be lowered.

The lead-acid battery according to the present disclosure is suitable for a vehicle controlled by idling stop/start (ISS). A lead-acid battery mounted on a vehicle controlled by ISS is often used in the PSOC, and an excellent deep discharge cycle life is required. In addition, excellent heavy load life performance is also required.

In the present specification, the full charge state of the flooded-type lead-acid battery is defined by the definition of JIS D 5301:2019. More specifically, the following state is defined as a full charge state: the lead-acid battery is charged with a current $2I_{20}$ (unit: A) that is twice a 20 hour rate current $I_{20}$ in a water bath at $25°C \pm 2°C$ until the terminal voltage (unit: V) during charge measured every 15 minutes or the electrolyte solution density subjected to temperature correction to $20°C$ exhibits a constant value at three significant digits continuously three times. The 20 hour rate current $I_{20}$ is a current (A) of 1/20 of a numerical value of Ah described in the rated capacity. The numerical value described as the rated capacity is a numerical value in which the unit is Ah (ampere-hour). The unit of the current set based on the numerical value indicated as the rated capacity is A (amperes). In the case of a valve regulated lead-acid battery, the full charge state is a state where the lead-acid battery is subjected to constant current constant voltage charge of 2.67 V/cell (16.00 V in a lead-acid battery having a rated voltage of 12 V) at a current of $5I_{20}$ (unit: A) that is five times the 20 hour rate current $I_{20}$ in an air tank at $25°C \pm2°C$, and charging is terminated when a total charging time reaches 24 hours.

The lead-acid battery in the full charge state is a lead-acid battery obtained by charging a formed lead-acid battery to the full charge state. The timing of charging the lead-acid battery to the full charge state may be immediately after the formation or after a lapse of time from the formation as long as the full charge is performed after the formation. For example, after formation, the lead-acid battery in use (preferably in the initial stage of use) may be charged.

In the present specification, the battery at the initial stage of use is a battery that has not been used for a long time and has hardly degraded.

The full charge state of the nickel-metal hydride battery is a state where the battery is charged according to "Charging procedure before test" of JIS C 63115-2:2022. First, the battery is discharged to 1.0 V per battery cell at a constant current of 0.2 It (unit: A) at an ambient temperature of $20°C \pm 5°C$. Thereafter, the battery is charged with a constant current of 0.1 It (unit: A) for 10 to 16 hours.

It is a reference test current. The reference test current is a current expressed by a formula It (unit: A) = C5 (unit: Ah)/1 (unit: h) corresponding to a reference time of 5 hours. Here, C5 is the rated capacity and represents an electrical capacity specified by a manufacturer.

The full charge state of the nickel-cadmium battery is defined according to the case of the full charge state of the nickel-metal hydride battery described above.

Hereinafter, embodiments of the present disclosure will be described with reference to examples, but the present disclosure is not limited to the examples described below. In the description below, specific numerical values and materials

**EP 4 550 517 A1**

may be shown as examples, but the other numerical values and the other materials may be used as long as the effects of the present disclosure are obtained. In this specification, the expression "numerical value A to numerical value B" includes the numerical value A and the numerical value B, and can be read as "numerical value A or more and numerical value B or less". In the following description, when the lower limit and the upper limit of numerical values related to specific physical properties, specific conditions are exemplified, and the like, any of the exemplified lower limits and any of the exemplified upper limits can be arbitrarily combined unless the lower limit is equal to or more than the upper limit. When a plurality of materials are exemplified, one of the materials may be selected and used alone, or two or more of the materials may be used in combination.

The present disclosure encompasses a combination of matters recited in two or more claims voluntarily selected from a plurality of claims recited in the appended claims. That is, as long as no technical contradiction arises, matters recited in two or more claims voluntarily selected from a plurality of claims recited in the appended claims can be combined.

In the present specification, the up-down direction of the aqueous electrolyte secondary battery or constituent elements (such as plate, container, and separator) of the aqueous electrolyte secondary battery means the up-down direction in the vertical direction of the aqueous electrolyte secondary battery disposed in a used state. In the lead-acid battery, each of the positive electrode plate and the negative electrode plate includes a lug part for connecting to an external terminal. For example, in flooded-type lead-acid batteries, the lug part is provided above the electrode plate so as to protrude upward.

Hereinafter, the aqueous electrolyte secondary battery according to one aspect of the present invention will be more specifically described for each of the main requirements. However, the present invention is not limited only to the constituent requirements described below. The constituent elements described in the present specification are arbitrarily combined. At least one constituent element described herein may be combined with at least one of (1) to (20) above.

[Aqueous electrolyte secondary battery]

The aqueous electrolyte secondary battery contains an element and an aqueous electrolyte solution.

The positive electrode plate, the negative electrode plate, and the separator constitute the element. The element constitutes a cell together with the electrolyte solution. One element constitutes one cell. The lead-acid battery includes one or more cells by including one or more electrode groups. The number of positive electrode plates and negative electrode plates included in one element is not particularly limited. The element included in the lead-acid battery according to the present disclosure includes, for example, 12 or more positive electrode plates and negative electrode plates in total. The plurality of elements are usually stored in individual cell chambers and connected to each other in series.

The lead-acid battery includes a positive electrode plate, a negative electrode plate, a separator interposed between the positive electrode plate and the negative electrode plate, and an electrolyte solution. The electrolyte solution contains sulfuric acid. When sulfate ions move between the positive and negative electrode plates and the electrolyte solution, charging and discharging progress. During discharging, sulfate ions move to the positive electrode plate and the negative electrode plate, so that the density of the electrolyte solution decreases. During charging, sulfate ions move from the positive electrode plate and the negative electrode plate into the electrolyte solution, so that the density of the electrolyte solution increases.

(Aqueous electrolyte solution)

The COD in the aqueous electrolyte solution is 5 mg/L or more and 160 mg/L or less. The COD in the electrolyte solution may be 120 mg/L or less. From the viewpoint of obtaining higher charge acceptability, the upper limit value of the COD in the above range in the aqueous electrolyte solution is preferably 130 mg/L or less or 100 mg/L or less, more preferably 50 mg/L or less or 30 mg/L or less, and still more preferably 25 mg/L or less. From the viewpoint of easily obtaining higher charge acceptability, the lower limit value of the above range is preferably 8 mg/L or more, and this lower limit value may be combined with each of the above upper limit values.

The COD in the aqueous electrolyte solution can be controlled, for example, by the following method. One of the following methods may be adopted, or a plurality of the methods may be combined.

(1) The concentration of an organic additive in the aqueous electrolyte solution is adjusted.
(2) The content of organic components contained in components other than the aqueous electrolyte solution is adjusted. Examples of the "constituent elements other than the aqueous electrolyte solution" include a separator, a current collector of a positive electrode plate or a negative electrode plate, and a positive electrode material or a negative electrode material. That is, the method of (2) can be roughly divided into the following three methods.

(2-1) The content of the organic additive having a relatively low molecular weight contained in the separator is controlled. Examples of the organic additive include a permeant and oil.

**12**

(2-2) A degree of washing of the current collector of the positive electrode plate or the negative electrode plate or a cutting oil adhering to a metal plate before being processed into the current collector is controlled.

(2-3) The content of at least one of an organic component and a carbonaceous material contained in the positive electrode material or the negative electrode material is controlled. The organic component contained in the electrode material also includes an organic expander.

An organic solvent can be used for washing the current collector or the metal plate. Examples of the organic solvent include at least one selected from an alcohol, a ketone, an ester, an ether, an amide, and a sulfoxide. Examples of the alcohol include ethanol. Examples of the ketone include acetone and ethyl methyl ketone. Examples of the ester include ethyl acetate. Examples of the ether include tetrahydrofuran. Examples of the amide include dimethylformamide and N-methyl-2-pyrrolidone. Examples of the sulfoxide include dimethylsulfoxide.

In order not to increase the COD in the aqueous electrolyte solution, it is desirable to use an organic solvent which is easily removed by washing with water, an organic solvent which is miscible with water, or the like as an organic solvent used for washing the current collector or the metal plate. The washing time is preferably, for example, 3 seconds or more in an organic solvent miscible with water. The upper limit of the washing time is not particularly limited, and may be, for example, 60 seconds or less.

The aqueous electrolyte solution is an aqueous solution in which a solute is dissolved. The aqueous electrolyte solution may be gelled as necessary. The solute is selected according to, for example, the type of the aqueous electrolyte secondary battery. The concentration of the solute or a specific gravity of the electrolyte solution is also determined according to, for example, the type and application of the aqueous electrolyte secondary battery.

For example, in the lead-acid battery, an aqueous solution containing sulfuric acid is used as the aqueous electrolyte solution. The aqueous electrolyte solution may further contain at least one metal ion selected from the group consisting of Na ions, Li ions, Mg ions, and Al ions.

The aqueous electrolyte solution provided for the assembly of the lead-acid battery may contain an organic additive. Examples of the organic additive include a surfactant. However, from the viewpoint of suppressing the COD in the aqueous electrolyte solution contained in the lead-acid battery to a low level, it is preferable that the aqueous electrolyte solution to be used for assembly of the lead-acid battery does not contain an organic additive.

In the lead-acid battery, the specific gravity of the aqueous electrolyte solution at 20°C is, for example, 1.10 or more. The specific gravity of the aqueous electrolyte solution at 20°C may be 1.35 or less. These specific gravities are values for the electrolyte solution of the lead-acid battery in the full charge state.

In a nickel-metal hydride battery and a nickel-cadmium battery among aqueous electrolyte secondary batteries, for example, an aqueous solution containing an inorganic base such as an alkali metal hydroxide (such as potassium hydroxide aqueous solution) is used as an aqueous electrolyte solution. However, the present invention is not limited to this case, and an aqueous solution containing a known solute used for a nickel-metal hydride battery or a nickel-cadmium battery can be used as the aqueous electrolyte solution.

(Element)

The element includes, for example, a positive electrode plate, a negative electrode plate, and a separator interposed therebetween. Each constituent element is selected according to the type of the aqueous electrolyte secondary battery.

(Positive electrode plate)

The positive electrode plate includes, for example, a positive electrode material and a positive electrode current collector holding the positive electrode material.

In the nickel-metal hydride battery and the nickel-cadmium battery, for example, a substrate made of nickel is used as the positive electrode current collector. Examples of the nickel-made substrate include a sintered plaque and a foamed substrate. The positive electrode material contains, for example, nickel oxide, and may contain a binder, a conductive agent, and the like as necessary. Examples of the nickel oxide include nickel oxyhydroxide.

In the lead-acid battery, the positive electrode plate includes the positive electrode material. The positive electrode material contains at least lead dioxide during charging and at least lead sulfate during discharging as a positive active material that exhibits a capacity through a redox reaction. As the positive electrode plate, either a paste-type or a clad-type positive electrode plate may be used.

In the paste-type positive electrode plate, the positive electrode material is a portion excluding the positive electrode current collector from the positive electrode plate. A member such as a mat or a pasting paper may be stuck to the positive electrode plate. Such a member (hereinafter, also referred to as a "sticking member") is used integrally with the positive electrode plate and is thus included in the positive electrode plate. When the positive electrode plate includes the sticking member, the positive electrode material is a portion obtained by removing the positive electrode current collector and the sticking member from the positive electrode plate.

The clad-type positive electrode plate includes a plurality of porous tubes, a spine inserted into each tube, a current collector coupling the plurality of spines, a positive electrode material with which a spine inserted tube is filled, and a joint that couples the plurality of tubes. In the clad-type positive electrode plate, the positive electrode material is a portion of the positive electrode plate which excludes the tubes, the spines, the current collector, and the spine protector. In the clad-type positive electrode plate, the spine and the current collector may be collectively referred to as a positive electrode current collector.

The positive electrode current collector may be formed by casting lead (Pb) or a lead alloy, or formed by processing a lead sheet or a lead alloy sheet. Examples of the processing method include expanding processing or punching processing. It is preferable to use a grid-shaped current collector as the positive electrode current collector because the positive electrode material is easy to support.

As a lead alloy used for the positive electrode current collector, a Pb-Ca-based alloy and a Pb-Ca-Sn-based alloy are preferable in terms of corrosion resistance and mechanical strength. The positive electrode current collector may have lead alloy layers having different compositions, and a single alloy layer or a plurality of alloy layers may be provided.

The positive electrode material contained in the positive electrode plate contains the positive active material that exhibits the capacity through the redox reaction. Examples of the positive active material include lead dioxide and lead sulfate. The positive electrode material may contain another additive if necessary. Examples of other additives include reinforcing materials and carbonaceous materials.

Examples of the reinforcing material include fibers. Examples of the fibers include inorganic fibers and organic fibers. Examples of the inorganic fibers include glass fibers and carbon fibers. Examples of the resin or polymer included in the organic fiber include at least one selected from the group consisting of an acrylic resin, a polyolefin resin, a polyester resin, and a cellulose compound. Examples of the polyester-based resin include polyethylene terephthalate. Examples of the cellulose compound include cellulose and cellulose derivatives. Examples of the cellulose derivative include cellulose ether and cellulose ester. The cellulose compound also includes rayon.

The content of the reinforcing material in the positive electrode material is, for example, 0.03% by mass or more. The content of the reinforcing material in the positive electrode material is, for example, 0.5% by mass or less.

A non-formed paste-type positive electrode plate is obtained by filling the positive electrode current collector with the positive electrode paste, and curing and drying the positive electrode paste. The positive electrode paste is prepared by adding water and sulfuric acid to a lead powder, an antimony compound, and if necessary, other additives such as a reinforcing material and a carbonaceous material, and mixing the mixture.

The positive electrode plate is obtained by forming the non-formed positive electrode plate. The formation can be performed by charging the element in the state where the element including the non-formed positive electrode plate immersed in the electrolyte solution containing sulfuric acid in the container of the lead-acid battery. However, the formation may be performed before the lead-acid battery or the element is assembled.

(Negative electrode plate)

The negative electrode plate includes, for example, a negative electrode material and a negative electrode current collector holding the negative electrode material.

In the nickel-metal hydride battery and the nickel-cadmium battery, for example, stainless steel, nickel, or a nickel alloy is used for the negative electrode current collector. The negative electrode material of the nickel-metal hydride battery contains, for example, a hydrogen storing alloy or a hydrogen compound containing hydrogen, and may contain a conductive agent, a binder, and the like as necessary. The negative electrode material of the nickel-cadmium battery contains a cadmium compound, and may contain a conductive agent, a binder, and the like as necessary.

In the lead-acid battery, the negative electrode material is a portion obtained by removing the negative electrode current collector from the negative electrode plate. The sticking member as described above may be stuck to the negative electrode plate. In this case, the sticking member is included in the negative electrode plate. When the negative electrode plate includes the sticking member, the negative electrode material is a portion obtained by removing the negative electrode current collector and the sticking member from the negative electrode plate.

The negative electrode current collector can be formed similarly to the case of the positive electrode current collector.

The lead alloy used for the negative electrode current collector may be any of a Pb-Sb-based alloy, a Pb-Ca-based alloy, and a Pb-Ca-Sn-based alloy. The lead or lead alloys may further contain, as an additive element, at least one selected from the group consisting of Ba, Ag, Al, Bi, As, Se, Cu, and the like. The negative electrode current collector may have lead alloy layers having different compositions, and a single alloy layer or a plurality of alloy layers may be provided.

The negative electrode material included the negative electrode plate contains a negative active material which exhibits a capacity through the redox reaction and may contain an organic expander, a carbonaceous material, barium sulfate, and the like. The negative electrode material may contain a Bi element in an amount of 100 ppm or more and 300 ppm or less on a mass basis. As the negative active material, lead or lead sulfate is used. The negative electrode material may contain other additives such as a reinforcing material as necessary.

Examples of the organic expander include lignin, lignin sulfonic acid, and a synthetic organic expander. Examples of the synthetic organic expander include formaldehyde condensates of phenol compounds. The negative electrode material may contain one kind or two or more kinds of organic expanders.

The content of the organic expander in the negative electrode material is, for example, 0.01% by mass or more. The content of the organic expander is, for example, 1% by mass or less.

Examples of the carbonaceous material contained in the negative electrode material include carbon black, graphite (such as artificial graphite and natural graphite), hard carbon, and soft carbon. The negative electrode material may contain one kind or two or more kinds of carbonaceous materials.

The content of the carbonaceous material in the negative electrode material is, for example, 0.1% by mass or more. The content of the carbonaceous material may be, for example, 3% by mass or less.

The content of barium sulfate in the negative electrode material is, for example, 0.1% by mass or more. The content of barium sulfate is, for example, 3% by mass or less.

Examples of the reinforcing material include fibers. The fiber can be selected from the materials exemplified for the positive electrode plate.

The content of the reinforcing material in the negative electrode material is, for example, 0.03% by mass or more. The content of the reinforcing material in the negative electrode material is, for example, 0.5% by mass or less.

The negative active material in a charge state is spongy lead, but the unformed negative electrode plate is usually prepared using a lead powder.

The negative electrode plate can be formed in such a manner that a negative electrode current collector is filled with a negative electrode paste, which is then cured and dried to prepare a non-formed negative electrode plate, and thereafter, the non-formed negative electrode plate is formed. The negative electrode paste is prepared by adding water and sulfuric acid to a lead powder, an organic expander, and if necessary, various additives and mixing the mixture. In the curing process, it is preferable to cure the non-formed negative electrode plate at room temperature or at a higher temperature and high humidity.

The formation can be performed by charging the element in the state where the element including the non-formed negative electrode plate immersed in the electrolyte solution containing sulfuric acid in the container of the lead-acid battery. However, the formation may be performed before the lead-acid battery or the element is assembled. The formation produces spongy lead.

(Separator)

As the separator, a porous film, a nonwoven fabric, or the like can be used. These may be combined as necessary. The nonwoven fabric is a mat in which fibers are intertwined without being woven and is mainly made of fibers. For example, 60% by mass or more of the separator is formed from fibers. The separator may be subjected to a hydrophilization treatment as necessary.

The separator preferably includes a resin porous film. The porous film can be used alone as a separator. Thus, the porous film may be referred to as a separator. The separator may include a nonwoven fabric in addition to the porous film.

In the nickel-metal hydride battery and the nickel-cadmium battery, examples of the material of the porous film used as the separator or fibers included in the separator include a polyolefin resin, a fluororesin, and a polyamide resin. Examples of the polyolefin resin include polyethylene and polypropylene. However, the present invention is not limited to these. The thickness of the separator may be, for example, 10 μm or more. Furthermore, the thickness of the separator may be 300 μm or less.

In the lead-acid battery, examples of fibers included in the nonwoven fabric include glass fibers, polymer fibers, and pulp fibers. The nonwoven fabric may contain components in addition to the fibers, such as acid-resistant inorganic powder, a polymer as a binder, and the like. The porous film is a porous sheet mainly composed of components other than fiber components.

(Porous film)

The porous film is a resin film having pores. The porous film includes a polymer material. The porous film contains optional components such as oil, inorganic particles, a permeant, and a pore-forming additive as necessary. The polymer material (hereinafter, also referred to as a base polymer) included in the resin film contains, for example, polyolefin. The polyolefin is a polymer containing at least an olefin unit (monomer unit derived from olefin).

The base polymer usually includes a crystalline polymer. The crystalline polymer includes, for example, polyolefin. The polyolefin is a polymer containing at least an olefin unit (that is, a polymer containing at least a monomer unit derived from olefin).

As the base polymer, polyolefin and another base polymer may be used in combination. For example, the ratio of the polyolefin in the entire base polymer contained in the crystalline polymer is 50% by mass or more, may be 80% by mass or more, or be 90% by mass or more. The ratio of the polyolefin is, for example, 100% by mass or less. The base polymer may be configured of only the polyolefin. When the ratio of the polyolefin is as large as described above, the oxidation resistance of the crystalline polymer tends to be low; however, even in such a case, high high-temperature overcharge life performance can be secured by setting the degree of crystallinity within the above range.

The porous film includes a crystalline region in which molecules of the base polymer are relatively regularly arranged (that is, the alignment property is high), and an amorphous region having a low alignment property. Thus, in the XRD spectrum of the porous film, a diffraction peak due to the crystalline region is observed, and scattered light due to the amorphous region is observed as a halo. In the XRD spectrum of the porous film, when the degree of crystallinity represented by $100 \times I_c/(I_c + I_a)$ is 18% or more, excellent high-temperature overcharge life performance is obtained even when the COD is low and the charge acceptability is high.

Here, $I_c$ is the integrated intensity of the diffraction peak (first diffraction peak) having the maximum peak height among the diffraction peaks corresponding to the crystalline region, and $I_a$ is the integrated intensity of the halo corresponding to the amorphous region.

For example, in the XRD spectrum of a separator containing a polyolefin containing an ethylene unit, the diffraction peak corresponding to the (110) plane of the crystalline region is observed in a range where $2\theta$ is 20° or more and 22.5° or less, and the diffraction peak corresponding to the (200) plane of the crystalline region is observed in a range where $2\theta$ is 23° or more and 24.5° or less. The halo in the amorphous region is observed in a range where $2\theta$ is 17° or more and 27° or less. Among the diffraction peaks due to the crystalline region, the diffraction peak corresponding to the (110) plane has the maximum peak height and corresponds to the first diffraction peak.

The degree of crystallinity may be 18% or more, and may be 23% or more or 25% or more from the viewpoint of securing higher high-temperature overcharge life performance. The degree of crystallinity may be 40% or less, 37% or less, or 35% or less. When the degree of crystallinity is in such a range, it is easy to ensure flexibility of the porous film, and it is easy to manufacture the porous film.

The degree of crystallinity of the porous film may be 18% or more and 40% or less, 23% or more and 37% or less, 25% or more and 35% or less, 23% or more and 40% or less, or 23% or more and 35% or less.

The integrated intensity of the diffraction peak and the halo is determined by fitting the diffraction peak by the crystalline region and the halo by the amorphous region in the XRD spectrum of the separator. Using the obtained integrated intensity $I_c$ of the first diffraction peak and the obtained integrated intensity $I_a$ of the halo, the degree of crystallinity is obtained from the above formula.

Examples of the polyolefin include a homopolymer of an olefin, a copolymer containing different olefin units, and a copolymer containing the olefin unit and a copolymerizable monomer unit. The copolymer containing the olefin unit and the copolymerizable monomer unit may contain one kind or two or more kinds of olefin units. Moreover, the copolymer containing the olefin unit and the copolymerizable monomer unit may contain one kind or two or more kinds of copolymerizable monomer units. The copolymerizable monomer unit is a monomer unit derived from a polymerizable monomer that is not the olefin but can be copolymerized with the olefin.

For example, a polymer containing at least a $C_{2-3}$ olefin as a monomer unit can be cited as the polyolefin. At least one selected from the group consisting of ethylene and propylene can be cited as the $C_{2-3}$ olefin. For example, a copolymer (for example, an ethylene-propylene copolymer) containing the polyethylene, the polypropylene, and/or the $C_{2-3}$ olefin as a monomer unit is more preferable for the polyolefin. Among the polyolefins, a polyolefin containing at least an ethylene unit (polyethylene, ethylene-propylene copolymer, etc.) is preferably used. A polyolefin containing an ethylene unit (polyethylene, ethylene-propylene copolymer, etc.) and another polyolefin may be used in combination.

The porous film preferably contains oil. When the porous film contains oil, the effect of suppressing oxidation degradation of the porous film can be further enhanced, and therefore, higher high-temperature overcharge life performance can be secured. The oil refers to a hydrophobic substance that is liquid at room temperature (a temperature greater than or equal to 20°C and less than or equal to 35°C) and is separated from water. The oil include oil derived from a natural product, mineral oil, and synthetic oil. Mineral oil, synthetic oil, and the like are preferable for the oil. For example, paraffin oil and silicone oil can be cited as an example of the oil. The porous film may contain one oil or two or more oils in combination.

The content of the oil in the porous film is preferably 11% by mass or more and 18% by mass or less. When the oil content is in such a range, the effect of suppressing oxidation degradation of the porous film is further enhanced. The resistance of the porous film can be suppressed to be relatively low.

The porous film may have a sheet shape. Furthermore, a sheet bent in a bellows shape may be used as the porous film. The porous film may be formed into a bag shape. Either one of the positive electrode plate and the negative electrode plate may be wrapped in a bag-shaped porous film.

When the porous film and the nonwoven fabric are used in combination, the porous film may have a region not covered with the nonwoven fabric at least at a portion of the end. This makes it possible to suppress the increase in internal resistance while suppressing falling off of the softened positive electrode material.

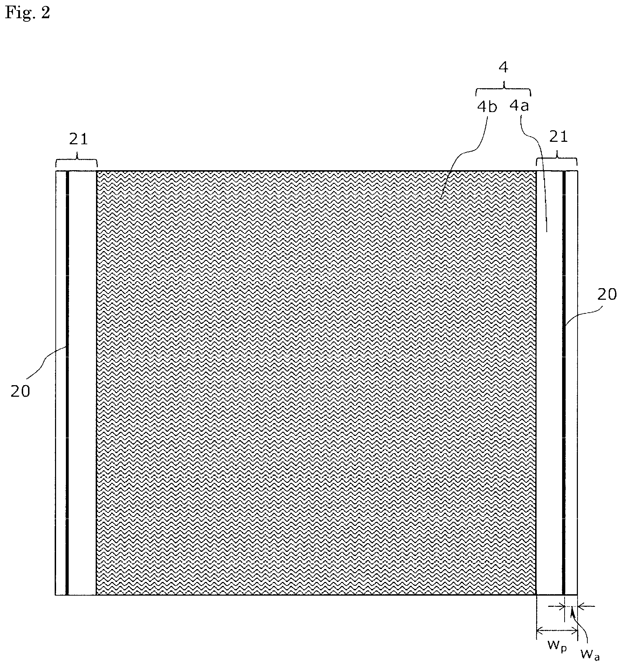

The porous film is roughly quadrangular and usually has a total of four ends including upper and lower ends and both side ends. At one end, a width (for example, $w_p$ in Fig. 2 described later) of the region of the porous film not covered with the nonwoven fabric is, for example, 1 mm or more, and may be 2 mm or more. The width of this region is, for example, 5 mm or less, and may be 4.5 mm or less or 4 mm or less. The porous film may have the region not covered with the nonwoven fabric at the side end (preferably both side ends). When the porous film formed into a bag shape by pressure-bonding the end and the nonwoven fabric are stacked, a predetermined region of the side end including the pressure-bonded portion is exposed to the outside of the nonwoven fabric.

The width of the region may be 1 mm or more (or 2 mm or more) and 5 mm or less, 1 mm or more (or 2 mm or more) and 4.5 mm or less, or 1 mm or more (or 2 mm or more) and 4 mm or less.

The porous film may or may not have a rib. In order to enhance the oxidation resistance of the porous film, a rib may be provided on a surface of the porous film facing the positive electrode plate. Since a gap is formed between the porous film and the positive electrode plate by the rib, the oxidation degradation of the porous film is reduced. For example, the porous film including the rib includes a base and a rib erected from a surface of the base. The rib may be provided only on a surface on one side of the porous film or each base, or provided on both surfaces. The base of the porous film is a portion of a constituent part of the porous film excluding a protrusion such as the rib, and refers to a sheet-shaped portion that defines the outer shape of the porous film.

The thickness of the porous film is, for example, 0.09 mm or more. The thickness is preferably 0.1 mm or more or 0.15 mm or more from the viewpoint of obtaining higher high-temperature overcharge life performance. The thickness of the porous film is, for example, 0.3 mm or less. From the viewpoint of suppressing the resistance of the porous film low, the thickness of the porous film may be 0.25 mm or less or 0.2 mm or less. The thickness of the porous film means an average thickness in a portion of the porous film facing the electrode material. When the porous film includes the base and the rib erected from at least one surface of the base, the thickness of the porous film is an average thickness in the base. When the sticking member (a mat, a pasting paper, etc.) is attached to the porous film, a thickness of the sticking member is not included in the thickness of the porous film.

The thickness of the porous film may be 0.09 mm or more and 0.3 mm or less (or 0.25 mm or less), 0.09 mm or more and 0.2 mm or less, 0.1 mm or more (or 0.15 mm or more) and 0.3 mm or less, 0.1 mm or more (or 0.15 mm or more) and 0.25 mm or less, or 0.1 mm or more (or 0.15 mm or more) and 0.2 mm or less.

When the porous film has the rib, the height of the rib may be 0.05 mm or more. The height of the rib may be less than or equal to 1.2 mm. The height of the rib is a height (protrusion height) of a portion protruding from a surface of the base.

The height of the rib provided in the region opposite to the positive electrode plate of the porous film may be 0.4 mm or more. The height of the rib provided in the region opposite to the positive electrode plate of the porous film may be 1.2 mm or less.

When the porous film and the nonwoven fabric are used in combination and a rib is provided on the positive electrode plate side of the porous film, the rib may be provided in a region not covered with the nonwoven fabric. When the rib is provided at a portion facing the positive electrode material, a nonwoven fabric may be disposed between adjacent ribs. However, the rib may not be particularly provided on the positive electrode plate side of the porous film by giving priority to ease of lamination with the nonwoven fabric.

The porous film is obtained, for example, by extrusion molding a resin composition containing a base polymer, a pore-forming additive, and a permeant (surfactant) into a sheet shape, stretching the resin composition, and then removing at least a portion of the pore-forming additive. By removing at least a portion of the pore-forming additive, micropores are formed in a matrix of the base polymer. The sheet-shaped porous film is dried as necessary after removing the pore-forming additive. For example, the degree of crystallinity is adjusted by adjusting at least one selected from the group consisting of a cooling rate of a sheet during extrusion molding, a stretch ratio during stretching, and the temperature during drying. For example, when the sheet is rapidly cooled at the time of extrusion molding, the stretch ratio is increased, or the temperature at the time of drying treatment is lowered, the degree of crystallinity tends to increase. The stretching may be performed by biaxial stretching, and is usually performed by uniaxial stretching. The sheet-shaped porous film may be bent into a bellows shape or processed into a bag shape as necessary.

In the porous film including the rib, the rib may be formed on the sheet when the resin composition is extrusion-molded. The rib may be formed by pressing the sheet with a roller having a groove corresponding to each rib after molding the resin composition into a sheet shape or after removing the pore-forming additive.

Examples of the pore-forming additive include a liquid pore-forming additive and a solid pore-forming additive. The pore-forming additive preferably contains at least oil. By using the oil, a porous film containing the oil is obtained, and the effect of suppressing oxidation degradation is further enhanced. The pore-forming additive may be used singly or in combination of two or more kinds thereof. The oil and another pore-forming additive may be used in combination. The liquid pore-forming additive and the solid pore-forming additive may be used in combination. At room temperature (a temperature greater than or equal to 20°C and less than or equal to 35°C), the liquid pore-forming additive is classified as a liquid pore-forming additive, and the solid pore-forming additive is classified as a solid pore-forming additive.

The liquid pore-forming additive is preferably the oil described above. For example, a polymer powder can be cited as an example of the solid pore-forming additive.

The amount of the pore-forming additive in the porous film may vary depending on the type. The amount of the pore-forming additive in the porous film is, for example, 30 parts by mass or more per 100 parts by mass of the base polymer. The amount of the pore-forming additive is, for example, 60 parts by mass or less per 100 parts by mass of the base polymer.

For example, a porous film containing oil is formed by extracting and removing a portion of oil from a sheet formed using oil as the pore-forming additive using a solvent. The solvent is selected, for example, according to the type of oil. For example, the content of the oil in the porous film is adjusted by adjusting the type and composition of the solvent, extraction conditions (extraction time, extraction temperature, rate of solvent supply, etc.), and the like.

For example, the surfactant as the permeant may be either an ionic surfactant or a nonionic surfactant. The surfactant may be used singly or in combination of two or more kinds thereof.

For example, the content of the permeant in the porous film is 0.01% by mass or more, and may be 0.1% by mass or more. The content of the permeant in the porous film may be 10% by mass or less. From the viewpoint of suppressing the COD in the electrolyte solution to a low level and improving the charge acceptability, the content of the permeant in the porous film may be 3% by mass or less, or 1% by mass or less, and is preferably 0.5% by mass or less, and more preferably 0.2% by mass or less.

The content of the permeant in the separator may be 0.01% by mass or more and 10% by mass or less, 0.1% by mass or more and 10% by mass or less, 0.01% by mass or more and 3% by mass or less, 0.1% by mass or more and 3% by mass or less, 0.01% by mass or more and 1% by mass or less, 0.1% by mass or more and 1% by mass or less, 0.01% by mass or more and 0.5% by mass or less, 0.1% by mass or more and 0.5% by mass or less, 0.01% by mass or more and 0.2% by mass or less, 0.1% by mass or more and 0.2% by mass or less, 0.09% by mass or more and 10% by mass or less, 0.09% by mass or more and 3% by mass or less, 0.09% by mass or more and 1% by mass or less, 0.09% by mass or more and 0.5% by mass or less, or 0.09% by mass or more and 0.2% by mass or less.

For example, an amount of the permeant in the separator is preferably 1 part by mass or less, more preferably 0.7 parts by mass or less per 100 parts by mass of the base polymer. By setting the amount of the permeant within the above range, the COD in the aqueous electrolyte solution is suppressed to a low level, and the charge acceptability of the aqueous electrolyte secondary battery is easily improved. For example, the amount of the permeant in the separator is 0.1 parts by mass or more, and may be 0.3 parts by mass or more per 100 parts by mass of the base polymer.

The amount of the permeant in the separator may be 0.1 parts by mass or more and 1 part by mass or less, 0.1 parts by mass or more and 0.7 parts by mass or less, 0.3 parts by mass or more and 1 part by mass or less, or 0.3 parts by mass or more and 0.7 parts by mass or less per 100 parts by mass of the base polymer.

The porous film (or the resin composition provided for production of the porous film) may contain inorganic particles.

For example, ceramic particles are preferable for the inorganic particles. For example, at least one selected from the group consisting of silica, alumina, and titania can be cited as the ceramic constituting the ceramic particle.

The content of the inorganic particles in the porous film may be, for example, 40% by mass or more. The content of the inorganic particles is, for example, 80% by mass or less and may be 70% by mass or less.

(Nonwoven fabric)

The nonwoven fabric is disposed between the porous film and the positive electrode plate so as to be in contact with the positive electrode plate. For example, when the porous film has a bag shape and the negative electrode plate is stored in the bag, a nonwoven fabric may be disposed between both outer surfaces of the bag and the positive electrode plate. At this time, when the electrode plate at an end of the element is a negative electrode plate, a nonwoven fabric may be disposed on one side facing the positive electrode plate of the bag-shaped porous film, and a nonwoven fabric may not be disposed on the other side not facing the positive electrode plate.

The nonwoven fabric may be a mat including at least one selected from the group consisting of glass fibers and organic fibers. Hereinafter, a mat containing glass fiber as a main component is referred to as a glass fiber mat. A mat containing organic fiber as a main component is referred to as an organic fiber mat. The main component refers to a component that accounts for 50% by mass or more of the mat.

The glass fiber mat is a nonwoven fabric including glass fibers. The glass fiber mat may be a material referred to as an absorbed glass mat (AGM, or Absorbent Glass Mat).

The glass fiber mat may be entirely formed of glass fiber. The content of the glass fiber in the glass fiber mat may be 90% by mass or more or 95% by mass or more. The content of the glass fiber in the glass fiber mat is 100% by mass or less. The glass fiber mat may contain a component other than the glass fiber, for example, an organic fiber, an acid-resistant inorganic powder, a polymer as a binder, and the like, and the content thereof is usually 10% by mass or less or 5% by mass or less.

The organic fiber mat may be entirely formed of organic fiber. The content of the organic fiber in the organic fiber mat may be 90% by mass or more or 95% by mass or more. The content of the organic fiber in the organic fiber mat is 100% by mass or less. The organic fiber mat may contain a component other than the organic fiber, for example, a glass fiber, an acid-resistant inorganic powder, a polymer as a binder, and the like, and the content thereof is usually 10% by mass or less or 5% by mass or less.

As the organic fiber, a polyolefin fiber, a polyester fiber, an acetalized polyvinyl alcohol fiber, a polyurethane fiber, a cellulose fiber, or the like can be used. These organic fibers have high affinity with the positive electrode material and are easily in close contact with the positive electrode plate. Thus, the effect of suppressing falling off of the softened positive electrode material is high.

An average fiber diameter of the glass fiber and the organic fiber is, for example, 0.1 $\mu$m or more, and may be 0.5 $\mu$m or more. When the average fiber diameter is in such a range, the effect of suppressing falling off of the softened positive electrode material is enhanced. The average fiber diameter is, for example, 30 $\mu$m or less, and may be 10 $\mu$m or less. In this case, it is possible to suppress an excessive increase in internal resistance of the battery. In addition, relatively high flexibility of the nonwoven fabric can be secured, and a relatively large amount of electrolyte solution can be easily retained.

The nonwoven fabric may have an average fiber diameter of 0.1 $\mu$m or more (or 0.5 $\mu$m or more) and 30 $\mu$m or less, or 0.1 $\mu$m or more (or 0.5 $\mu$m or more) and 10 $\mu$m or less.

An area density of the nonwoven fabric is, for example, 10 g/m$^2$ or more. The area density of the nonwoven fabric may be 100 g/m$^2$ or less, or may be 50 g/m$^2$ or less.

The thickness of the nonwoven fabric is, for example, 30 $\mu$m or more, and may be 50 $\mu$m or more. The thickness of the nonwoven fabric is, for example, 800 $\mu$m or less, and may be 100 $\mu$m or less. When the thickness of the nonwoven fabric is in the above range, since the nonwoven fabric is sufficiently thin and has high strength, higher CCA performance and more excellent heavy load life performance can be obtained.

The porosity of the nonwoven fabric is, for example, 20% or more, and may be 40% or more. When the porosity is within the above range, diffusibility of the electrolyte solution can be secured, and the increase in resistance can be suppressed. The porosity of the nonwoven fabric is, for example, 80% or less, and may be 70% or less.

An average pore diameter of the nonwoven fabric is, for example, 0.1 $\mu$m or more, and may be 0.5 $\mu$m or more. When the average pore diameter is within the above range, the increase in resistance due to the use of the nonwoven fabric can be suppressed. The average pore diameter is, for example, 100 $\mu$m or less, and may be 80 $\mu$m or less. When the average pore diameter is within the above range, falling off of the positive electrode material can be effectively suppressed.

The porous film and the nonwoven fabric may be stacked. The porous film and the nonwoven fabric may be simply stacked or stacked (or fixed) using an adhesive. The porous film and the nonwoven fabric may be stacked or fixed using welding, mechanical adhesion, or the like. Examples of the welding method include heat sealing. Examples of the method of mechanical adhesion include gear sealing. Examples of the adhesive include a silicone-based adhesive, an epoxy-based adhesive, and a polyolefin-based adhesive. An application amount of the adhesive is preferably small so that resistance of a layered product (separator) does not increase. For example, it is preferable to partially apply the adhesive rather than to the entire surface to be bonded of the porous film or the nonwoven fabric.

(Fiber mat)

The lead-acid battery may further include a fiber mat interposed between the positive electrode plate and the negative electrode plate. The fiber mat is a member different from the separator. The fiber mat contains a sheet-shaped fiber assembly. As such a fiber assembly, a sheet in which fibers insoluble in the electrolyte solution are entangled is used. Examples of such a sheet include a nonwoven fabric, a woven fabric, and a knitted fabric. For example, 60% by mass or more of the fiber mat is formed of fibers. As the fibers, glass fibers, polymer fibers, pulp fibers, and the like can be used. Among the polymer fibers, polyolefin fibers are preferable.

(Others)

The aqueous electrolyte secondary battery may include one cell or two or more cells. When the aqueous electrolyte secondary battery includes a plurality of cells, in other words, when the aqueous electrolyte secondary battery includes a plurality of elements, the plurality of elements may be connected in series.

The aqueous electrolyte secondary battery can be obtained, for example, by a manufacturing method including a step of storing an element and an electrolyte solution in a cell chamber of a container. Each cell of the aqueous electrolyte secondary battery includes the element and the electrolyte solution stored in each cell chamber. The element is assembled by, for example, stacking a positive electrode plate, a negative electrode plate, and a separator such that the separator is interposed between the positive electrode plate and the negative electrode plate prior to storage in the cell chamber. The positive electrode plate, the negative electrode plate, and the separator are usually each prepared prior to the assembly of the element. The electrolyte solution is prepared prior to storage in the cell chamber. When the aqueous electrolyte secondary battery includes one element, the container does not need to be divided into a plurality of cell chambers, and the element and the electrolyte solution may be stored in the container. A method for manufacturing the aqueous electrolyte secondary battery may include a step of forming at least one of the positive electrode plate and the negative electrode plate as necessary after a step of storing the element and the electrolyte solution in the cell chamber. For example, a lead-acid battery, a nickel-cadmium battery, or a nickel-metal hydride battery may be manufactured according to such a manufacturing method. In the nickel-cadmium battery and the nickel-metal hydride battery, for example, a battery may be formed by storing an element and an electrolyte solution in a battery case and sealing an opening of the battery case. In the assembled aqueous electrolyte secondary battery, a break-in charge/discharge may be performed as necessary.

Hereinafter, an evaluation method will be described.

(1) COD of aqueous electrolyte solution

The COD of the aqueous electrolyte solution is measured in accordance with JIS K 0102-1:2021, "17.2 Oxygen consumption by acidic potassium permanganate (CODMn)".

COD (CODMn) is obtained by the following formula. At this time, CODMn is obtained by two significant figures, first decimal place, and lower limit value < 0.5.

$$\text{CODMn} = (\text{titration value - BL}) \times \text{F} \times 1000/\text{V} \times 0.2$$

Titration value: Amount (mL) of aqueous potassium permanganate solution having concentration of 5 mmol/L required for titration of sample prepared from electrolyte solution

Blank (BL): Amount (mL) of aqueous potassium permanganate solution having concentration of 5 mmol/L required for titration in test using distilled water

F: Factor of aqueous potassium permanganate solution having concentration of 5 mmol/L

V: Amount (mL) of sample prepared from electrolyte solution (sample used for titration)

0.2: Considerable amount (mg) of oxygen of 1 mL of aqueous potassium permanganate solution having concentration of 5 mmol/L

A titration sample is prepared by the following procedure. First, the electrolyte solution is collected from the aqueous electrolyte secondary battery in an initial full charge state into a 300 mL volume Erlenmeyer flask. The collection amount of the electrolyte solution is adjusted to a maximum of 100 mL so that the titration amount is in a range of 3.5 mL to 5.5 mL. When the collection amount is less than 100 mL, the collection amount is measured, and distilled water is added until the amount after dilution reaches 100 mL. In this way, a sample of the electrolyte solution is provided. As a sample for BL, 100 mL of distilled water is provided in another 300 mL volume Erlenmeyer flask. The measurement of BL is carried out every time the titration of a sample prepared from the electrolyte solution is carried out.

Samples for titration are prepared from a sample of 100 mL of electrolyte solution and a sample of distilled water for BL, respectively, in the following procedure. First, an aqueous sulfuric acid solution having a concentration of 47% by mass is added to each sample by an automatic burette until the sample becomes acidic. However, in the case of the electrolyte solution of the lead-acid battery, the step of adding the aqueous sulfuric acid solution is skipped. To the resulting mixture or the sample, 10 mL of aqueous potassium permanganate solution having a concentration of 5 mmol/L is added with a whole pipette and stirred. Each Erlenmeyer flask is then placed in a boiling water bath and heated for 30 minutes. At this time, the water in the water bath is constantly boiled so that a liquid level of the water bath does not become equal to or lower than a liquid level of a liquid in the Erlenmeyer flask. After heating for 30 minutes, the Erlenmeyer flask is taken out, and immediately 10 mL of an aqueous sodium oxalate solution having a concentration of 12.5 mmol/L is added to the liquid in the Erlenmeyer flask with a hole pipette. A sample for titration is provided by cooling the liquid until the temperature of the liquid reaches a range of 50°C to 60°C. When the sample contains chloride ions, 2 mL of an aqueous silver nitrate solution having a concentration of 500 g/L is added with a measuring pipette, and the resulting mixture is well stirred until precipitation disappears and a clear liquid is obtained. When cloudiness does not disappear, stirring is performed while further adding the aqueous silver nitrate solution little by little until the cloudiness disappears. The silver nitrate aqueous solution is added in such an amount that silver nitrate is in excess of 1 g from an equivalent of chloride ions contained in each sample as a whole. The aqueous silver nitrate solution is added to the sample or a mixture to which an aqueous sulfuric acid solution is added.

Each of the provided samples for titration is titrated with an aqueous potassium permanganate solution having a concentration of 5 mmol/L. During the titration, when the liquid in the Erlenmeyer flask exhibits a slightly red color, the titration is stopped, the Erlenmeyer flask is allowed to stand for about 30 seconds, and it is confirmed whether the red color disappears. When the red color disappears, titration and standing are repeated until the red color does not disappear. For a sample prepared from the electrolyte solution and a sample prepared from distilled water, the COD of the electrolyte solution is determined using the amount (mL) of the aqueous potassium permanganate solution required for titration as the titration value of the above formula and BL. In the preparation of the sample, when the electrolyte solution is diluted with distilled water, the COD of the electrolyte solution before dilution is calculated in consideration of the dilution.

(2) (Analysis or size measurement of porous film and nonwoven fabric)

(Provision of sample)

For analysis or size measurement of the porous film and the nonwoven fabric, unused separator and nonwoven fabric or a porous film and a nonwoven fabric taken out from the lead-acid battery in the full charge state at the initial stage of use are used. The porous film and the nonwoven fabric taken out of the lead-acid battery are washed and dried prior to the analysis or the measurement.
The porous film and the nonwoven fabric taken out of the lead-acid battery are washed and dried in the following procedure. The porous film and the nonwoven fabric taken out from the lead-acid battery are immersed in pure water for 1 hour to remove sulfuric acid in the porous film and the nonwoven fabric. Subsequently, the porous film and the nonwoven fabric are taken out of a liquid in which the porous film and the nonwoven fabric have been immersed, left to stand in an environment of 25°C ± 5°C for 16 hours or more, and dried.

(XRD spectrum)

The XRD spectrum of the porous film is measured by irradiation with X-rays from a direction perpendicular to the surface of the porous film. A sample for measurement is prepared by processing the portion of the porous film facing the electrode material into a strip shape. In the porous film including the rib, the base portion is processed into a strip shape so as not to include the rib, thereby preparing the sample.
Measurement and fitting of the XRD spectrum are performed under the following conditions.

Measuring apparatus: RINT-TTR2, manufactured by Rigaku Corporation
Fitting: FT (step scan) method
Measurement angle range: 15 to 35°
Step width: 0.02°
Measurement speed: 5°/min
XRD data processing: XRD pattern analysis software (PDXL2, manufactured by Rigaku Corporation) was used.

(Thickness of porous film and nonwoven fabric and height of rib)

The thickness of the porous film and the nonwoven fabric is obtained by measuring and averaging the thickness of the porous film portion or the nonwoven fabric at five arbitrarily selected points in each sectional photograph.
The height of the rib is obtained by averaging the heights of the ribs from the base measured at arbitrarily selected 10 points of the rib on one surface of the base in the sectional photograph of the porous film.

(Oil content in porous film)

A portion of the porous film facing the electrode material is processed into a strip shape to prepare a sample (hereinafter, referred to as a sample A). In the porous film including the rib, the base portion is processed into a strip shape so as not to include the rib, thereby preparing the sample A.
About 0.5 g of the sample A is collected, and accurately weighed to obtain the mass ($m_0$) of the initial sample. The weighed sample A is placed in a glass beaker having an appropriate size, and 50 mL of n-hexane is added. Subsequently, an oil content contained in the sample A is eluted into the n-hexane by applying ultrasonic waves to the sample for about 30 minutes and all a beaker. Subsequently, the sample is taken out of the n-hexane, dried at room temperature (temperature greater than or equal to 20°C and less than or equal to 35°C) in an atmosphere, and then weighed to obtain the mass ($m_1$) of the sample after oil removal. Then, the content of the oil is calculated by the following equation. The oil content is determined for the ten samples A, and the average value is calculated. The obtained average value is defined as the content of the oil in the separator.

$$\text{Content of oil (\% by mass)} = (m0 - m1)/m0 \times 100$$

(Content of inorganic particles in porous film)

A part of the sample A prepared similarly to above is collected, accurately weighed, placed in a platinum crucible, and heated with a Bunsen burner until no white smoke comes out. Subsequently, in an electric furnace (550°C $\pm$ 10°C in oxygen stream), the obtained sample is heated for about 1 hour and incinerated, and the incinerated product is weighed. The ratio (percentage) of the mass of the incinerated product to a mass of the sample A is calculated, and set to the content (% by mass) of the inorganic particles. The content of the inorganic particles is determined for the ten samples A, and the average value is calculated. The obtained average value is defined as the content of the inorganic particles in the porous film.

(Content of permeant in porous film)

A part of the sample A prepared similarly to above is collected, accurately weighed, and then dried for greater than or equal to 12 hours at room temperature (temperature greater than or equal to 20°C and less than or equal to 35°C) under a reduced pressure environment lower than atmospheric pressure. The dried product is placed in a platinum cell and set in a thermogravimetric measuring apparatus, and the temperature is increased from room temperature to 800°C $\pm$ 1°C at a temperature rising rate of 10 K/min. An amount of weight loss when the temperature is increased from room temperature to 250°C $\pm$ 1°C is set to the mass of the permeant, and the ratio (percentage) of the mass of the permeant to the mass of the sample A is calculated and set to the content (% by mass) of the permeant. Q5000IR manufactured by T.A. Instruments is used as the thermogravimetric measuring apparatus. The content of the permeant is determined for the ten samples A, and the average value is calculated. The obtained average value is defined as the content of the permeant in the porous film.

(Average fiber diameter of nonwoven fabric)

The average fiber diameter of the nonwoven fabric is determined by determining a maximum diameter of any cross section perpendicular to the length direction of any 100 fibers taken out from the nonwoven fabric and averaging the maximum diameters.

(Surface density of nonwoven fabric)

The portion of the nonwoven fabric facing the electrode material is cut, a portion not applied with the adhesive is collected and weighed, and the vertical and horizontal sizes (in other words, the vertical and horizontal sizes of the cut portion) of the nonwoven fabric are measured. The area is calculated from the vertical and horizontal sizes of the nonwoven fabric, and the mass (g) of the nonwoven fabric per 1 m$^2$ is determined as the area density.

(Porosity of nonwoven fabric)

The porosity is a value obtained by measuring the dimension, weight, and density of a sample cut into a rectangular parallelepiped having an appropriate size, and calculating from a ratio between an apparent volume and a true volume according to the following formula.

$$\text{Porosity (\%)} = (\text{apparent volume/true volume}) \times 100$$

$$\text{Apparent volume (cm}^3) = \text{length (cm)} \times \text{width (cm)} \times \text{thickness (cm)}$$

$$\text{True volume (cm}^3) = \text{weight (g)/density (g/cm}^3)$$

(Average pore diameter of nonwoven fabric)

A portion of the nonwoven fabric facing the electrode material to which the adhesive is not applied is collected and cut into a size of 20 mm in length × 5 mm in width to obtain a measurement sample. A pore distribution of the measurement sample is measured by a mercury intrusion method using a mercury porosimeter "AutoPore IV9510" manufactured by Shimadzu Corporation. A pressure range for the measurement is 4 psia ($\approx$ 27.6 kPa) or more and 60,000 psia ($\approx$ 414 MPa) or less. The range of the pore diameter is 0.01 $\mu$m or more and 50 $\mu$m or less. The pore diameter at which the cumulative pore volume is 50% of the total pore volume is taken as the average pore diameter.

(3) Analysis of content of Bi element

For the analysis of the content of the Bi element in the negative electrode material, the negative electrode plate taken out from the unused lead-acid battery or the lead-acid battery in the full charge state at the initial stage of use is used. The negative electrode plate taken out of the lead-acid battery is washed and dried prior to the analysis or the measurement.
After the negative electrode plate taken out from the lead-acid battery is washed with water and dried, the negative electrode material is collected, and a sample of the pulverized negative electrode material is provided. The Bi content is determined by dissolving the sample in a (1+3) nitric acid solution heated to about 100°C and then performing ICP (Inductively Coupled Plasma) emission spectrometry on a solution obtained by filtering insoluble matters.
Hereinafter, a test method for the aqueous electrolyte secondary battery will be described by taking a lead-acid battery as an example.
Charging and discharging are performed under the following conditions, and the charge acceptability of the lead-acid battery is evaluated based on a charge current $I_{ca2}$ at 10 minutes point after the start of charging.

1) After confirming that the temperature of the electrolyte solution in any one cell near the center of the lead-acid battery is 25$\pm$2°C, discharging is performed for 2.5 hours at a current 3.42 times the 20 hour rate current $I_{20}$.
2) Immediately after discharging in 1) above, the lead-acid battery is moved to a cooling chamber at 0$\pm$1°C and placed until the temperature of the electrolyte solution in any one cell near the center reaches 0$\pm$1°C.
3) After confirming that the temperature of the electrolyte solution in any one cell near the center is 0$\pm$2°C, the lead-acid battery is charged at a constant voltage of 2.4$\pm$0.015 V/cell at the same temperature with a limited current of 100 A, and the charge current $I_{ca2}$ at the 10 minutes point after the start of charging is measured.

In the nickel-metal hydride battery and the nickel-cadmium battery, the internal resistance of the battery is measured, and the charge acceptability is evaluated based on the measured value. The internal resistances of the nickel-metal hydride battery and the nickel-cadmium battery are measured according to 7.13.3 "Measurement of DC internal resistance" of JIS C8708: 2019.
Hereinafter, a test method for the lead-acid battery will be described.

(1) Light load life test

The light load life is evaluated based on the number of cycles until reaching the life in the following charge-discharge cycle test in accordance with JIS D 5301: 2019. However, for convenience, an ambient temperature of the test is changed from a 40°C liquid phase to a 75°C gas phase, and the time of 25 A discharge in a charge-discharge cycle is changed from 4 minutes to 2 minutes.

(a) A test battery is discharged at a discharge current of 25 A$\pm$0.1 A for 2 minutes in an environment of 75°C.
(b) Thereafter, the battery is charged at a charge voltage of 14.80 V (limiting current 25.0 A) for 10 minutes.
(c) (a) and (b) as one cycle are repeated 480 times. A pause of 40 to 60 hours is performed every 480 cycles, and then discharging is performed at a rated cold cranking ampere $I_{cc}$ for 30 seconds. The number of cycles at the time when the voltage at 30 seconds point decreases to 7.2 V is defined as the number of life cycles. Here, the cold cranking ampere $I_{cc}$ is a current value according to a performance rank defined in JIS D 5301: 2019.

Since the discharging with the rated cold cranking ampere $I_{cc}$ is performed every 480 cycles, the number of cycles at which the voltage at the 30 seconds point is 7.2 V may be obtained by linear interpolation from a graph in which the vertical axis is the voltage at the 30 seconds point in the $I_{cc}$ discharging and the horizontal axis is the number of cycles, and this may be used as the number of life cycles.

(2) CCA performance

In accordance with JIS D 5301: 2019, the startability of the lead-acid battery is evaluated by the terminal voltage at 30 seconds point after the start of discharge according to the following procedure. It means that the larger the voltage value, the higher the startability, and the lower the internal resistance.

(a) After the storage battery is charged to the full charge state, the storage battery is placed in a cooling chamber at -18°C ± 1°C for a minimum of 16 hours.
(b) After confirming that an electrolyte solution temperature of any cell in the center is -18°C ± 1°C, discharging is performed with the cold cranking ampere $I_{CC}$ for 30 seconds.
(c) The 30-second terminal voltage after the start of discharge is recorded.

Here, the cold cranking ampere $I_{CC}$ is a current value according to a performance rank defined in JIS D 5301: 2019.

(3) Heavy load life performance

The heavy load life performance is evaluated as follows.

A heavy load test is performed in accordance with JIS D 5301: 2019 9.5.5 life test b) heavy load life test. More specifically, first, the lead-acid battery in the full charge state is discharged at the discharge current shown in Table 1 for 1 hour, and then charged at the charge current shown in Table 1 for 5 hours. This cycle of discharge and charge is defined as one cycle. The discharge current and the discharge current are each changed as shown in Table 1 according to a 20-hour rate capacity of the lead-acid battery. During the test, the lead-acid battery is placed in a water bath at 40°C ± 2°C. The water surface of the water tank is positioned 15 mm to 25 mm below an upper surface of the storage battery. When several lead-acid batteries are arranged in the water tank, a distance between the adjacent lead-acid batteries and a distance between the lead-acid battery and an inner wall of the water tank adjacent to the lead-acid battery are each set to a minimum of 25 mm.

[Table 1]

|  | 20-hour rate capacity | |
| --- | --- | --- |
|  | 55 Ah or more and 81 Ah or less | More than 81 Ah and 205 Ah or less |
| Discharge current (A) | 20 | 40 |
| Charge current (A) | 5 | 10 |

During the test, continuous discharging is performed at the discharge current shown in Table 1 every 25 cycles until the terminal voltage of the lead-acid battery reaches 10.2 V, and a discharge duration time is recorded. Next, the lead-acid battery is charged at the charge current shown in Table 1 every 15 minutes until the terminal voltage of the lead-acid battery or the density (in terms of 25°C) of the electrolyte solution exhibits a constant value continuously three times. The discharge and charge are also added to the number of cycles.

It is confirmed that the capacity (Ah) obtained from a product of a discharge time and the discharge current measured in the above test decreases to 50% or less of a value obtained by dividing the 20-hour rate capacity by 1.155 and does not increase again, and the test is terminated. The number of cycles until the end of the test is used as an index of the life performance in the heavy load life test. The fact that the capacity does not increase again is confirmed based on the fact that the capacity decreases to 50% or less of the value obtained by dividing the 20-hour rate capacity by 1.155, then the battery is charged to the full charge state, the same discharging as described above is performed again, and the capacity obtained from the product of the discharge time and the discharge current at this time is 50% or less of the value obtained by dividing the 20-hour rate capacity by 1.155. The number of cycles at which the battery comes to the end of its life is determined by approximating the number of cycles at 50% or less of the value obtained by dividing the 20-hour rate capacity by 1.155 from a graph of the number of cycles and the capacity obtained by plotting the discharge capacity every 25 cycles.

Although water addition is appropriately performed with purified water, water addition should not be performed immediately before continuous discharge.

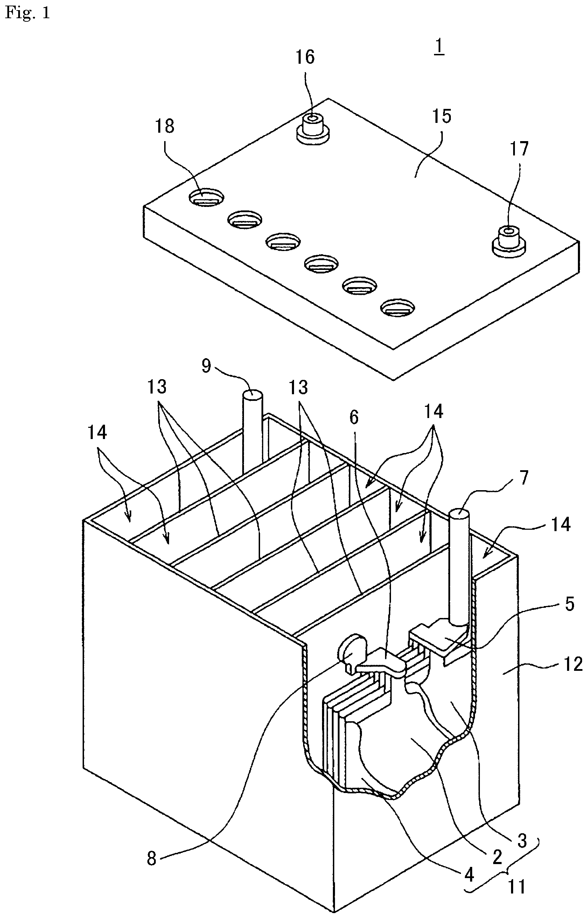

Fig. 1 shows an appearance of the lead-acid battery which is an example of the aqueous electrolyte secondary battery according to the embodiment of the present invention. If necessary, at least one constituent element of the following embodiments may be combined with any one of (1) to (20) above.

A lead-acid battery 1 includes a container 12 that stores an element 11 and an electrolyte solution (not shown). An inside of the container 12 is partitioned by partitions 13 into a plurality of cell chambers 14. Each of the cell chambers 14 contains one element 11. An opening of the container 12 is closed with a lid 15 having a negative electrode terminal 16 and a positive electrode terminal 17. A vent plug 18 is provided in the lid 15 for each cell chamber. At the time of water addition, the vent plug 18 is removed to supply a water addition liquid. The vent plug 18 may have a function of discharging gas generated in the cell chamber 14 to the outside of the battery.

The element 11 is configured by laminating a plurality of negative electrode plates 2 and a plurality of positive electrode plates 3 with a separator 4 interposed therebetween. At this point, the bag-shaped separator 4 storing the negative electrode plate 2 is shown, but the form of the separator is not particularly limited. In the cell chamber 14 located at one end of the container 12, a negative electrode shelf 6 connecting the plurality of negative electrode plates 2 in parallel is connected to a penetrating connection body 8, and a positive electrode shelf 5 connecting the plurality of positive electrode plates 3 in parallel is connected to a positive pole 7. The positive pole 7 is connected to the positive electrode terminal 17 outside the lid 15. In the cell chamber 14 located at the other end of the container 12, a negative pole 9 is connected to the negative electrode shelf 6, and the penetrating connection body 8 is connected to the positive electrode shelf 5. The negative pole 9 is connected to the negative electrode terminal 16 outside the lid 15. Each of the penetrating connection bodies 8 passes through a through-hole provided in the partition 13 to connect the elements 11 of the adjacent cell chambers 14 in series.

Fig. 2 is a schematic plan view of the separator 4 when a porous film and a nonwoven fabric are used in combination. The separator 4 is a layered product of a bag-shaped porous film 4a and a nonwoven fabric 4b. The negative electrode plate 2 of Fig. 1 is stored in the bag-shaped porous film 4a. A lower end of the bag-shaped porous film 4a in Fig. 2 is a fold line, and the upper end is an opening. At both side end portions of the bag-shaped porous film 4a, a pressure-bonding portion 20 is linearly provided in the up-down direction so as to close the overlapped porous film 4a. A region 21 not covered with the glass fiber mat 4b is formed at each of the both side end portions of the bag-shaped porous film 4a. A side end of the nonwoven fabric 4b is located inside the pressure-bonding portion 20. Thus, the width $w_p$ of the region 21 is larger than a width $w_a$ from the side end of the porous film 4a to the pressure-bonding portion 20 (more specifically, position outside the pressure-bonding portion 20).

The separator 4 is disposed in the lead-acid battery 1 such that the nonwoven fabric 4b is in contact with the positive electrode plate 3. In the separator 4 of Fig. 2, when the back side is in contact with the positive electrode plate 3, the nonwoven fabric 4b as shown on the front side is also provided on the back side.

[Examples]

Hereinafter, the present invention will be specifically described based on Examples and Comparative Examples, but the present invention is not limited to the following Examples.

<<Lead-acid batteries E1-1 to E1-12 and C1-1 to C1-5>>

Each lead-acid battery was produced by the following procedure.

(1) Preparation of positive electrode plate

Lead oxide, synthetic resin fiber as a reinforcing material, water, and sulfuric acid were mixed to prepare a positive electrode paste. The positive electrode paste was filled in a mesh portion of an expanded grid made of an antimony-free Pb-Ca-Sn-based alloy, cured, and dried to obtain a non-formed positive electrode plate having a width of 100 mm, a height of 110 mm, and a thickness of 1.6 mm.

(2) Preparation of negative electrode plate

Lead oxide, carbon black, barium sulfate, lignin, synthetic resin fiber as a reinforcing material, water and sulfuric acid were mixed to prepare a negative electrode paste. The negative electrode paste was filled in a mesh portion of an expanded grid made of an antimony-free Pb-Ca-Sn-based alloy, cured, and dried to obtain a non-formed negative electrode plate having a width of 100 mm, a height of 110 mm, and a thickness of 1.3 mm. The amounts of the carbon black, the barium sulfate, the lignin, and the synthetic resin fiber used were adjusted so that the content of each component was 0.3% by mass, 2.1% by mass, 0.1% by mass, and 0.1% by mass, respectively, for the negative electrode plate taken out from the lead-acid battery in the full charge state.

(3) Preparation of separator

A resin composition containing 100 parts by mass of polyethylene, 160 parts by mass of silica particles, 80 parts by mass of paraffin-based oil as a pore-forming additive, and a suitable amount of a permeant was extrusion-molded into a sheet shape, and stretched, and then a portion of the pore-forming additive was removed to prepare a porous film including a rib on one surface. The rib had a height of 0.6 mm. The average thickness of the base portion of the separator was 0.2 mm. The sheet-shaped porous film was folded in two so that a rib was disposed on the outer surface to form a bag, and the overlapped both ends were pressure-bonded to obtain a bag-shaped separator.

(4) Preparation of lead-acid battery

The non-formed negative electrode plate was stored in a bag-shaped separator, and stacked with the positive electrode plate, and an element was formed of seven non-formed negative electrode plates and six non-formed positive electrode plates.

Lug portions of the positive electrode plates and lug portions of the negative electrode plates were welded to the positive electrode shelf and the negative electrode shelf by a cast-on strap method. The element was inserted into a polypropylene container, and filled with an electrolyte solution, and formation was performed in the container to assemble a flooded-type lead-acid battery having a rated voltage of 12 V and a rated capacity of 30 Ah. In the container, six elements are connected in series. Here, the rated capacity is a 5-hour rate capacity. The 5-hour rate capacity is a capacity when discharging is performed at a current (A) of 1/5 of the numerical value of Ah described in the rated capacity.

As the electrolyte solution, an aqueous sulfuric acid solution was used. The specific gravity of the electrolyte solution after the formation at 20°C was 1.285.

In a lead-acid battery C1-1, the amount of the permeant of the separator at the time of preparing the separator was 2 parts by mass. In the lead-acid battery C1-1, the positive electrode plate and the negative electrode plate were formed without washing the expanded grid of the positive electrode plate and the negative electrode plate and a plate-like object before forming the expanded grid. In the lead-acid batteries E1-1 to E1-12, the COD in the electrolyte solution of the lead-acid battery in the initial full charge state determined by the procedure described above was adjusted to be the value shown in Table 2 by making the amount of the permeant smaller than that in the case of C1-1 when the separator was prepared.

(5) Evaluation

The charge acceptability was evaluated by the procedure described above using the obtained lead-acid battery. The charge acceptability was evaluated by a ratio of $I_{ca2}$ of each lead-acid battery when $I_{ca2}$ of the lead-acid battery C1-1 was 100.

Table 2 shows the evaluation results. E1-1 to E1-12 correspond to examples. C1-1 to C1-5 correspond to comparative examples.

[Table 2]

|  | COD (mg/L) | Charge acceptability (%) |
|---|---|---|
| C1-1 | 170 | 100 |
| E1-1 | 160 | 120 |
| E1-2 | 130 | 130 |
| E1-3 | 100 | 140 |
| E1-4 | 50 | 160 |
| E1-5 | 30 | 163 |
| E1-6 | 25 | 165 |
| E1-7 | 20 | 165 |
| E1-8 | 15 | 165 |
| E1-9 | 13 | 164 |
| E1-10 | 10 | 165 |
| E1-11 | 8 | 163 |
| E1-12 | 5 | 130 |
| C1-2 | 3 | 110 |
| C1-3 | 1 | 90 |

(continued)

|  | COD (mg/L) | Charge acceptability (%) |
|---|---|---|
| C1-4 | 0.5 | 88 |
| C1-5 | 0.3 | 90 |

As shown in Table 2, when C1-1 was compared with E1-1 to E1-12, in the case where the COD in the electrolyte solution was 160 mg/L or less, the charge acceptability was greatly improved as compared with the case where the COD was more than 160 mg/L. On the other hand, comparing E1-12 with C1-2 to C1-5, when the COD in the electrolyte solution was 5 mg/L or more, the charge acceptability was greatly improved as compared with the case where the COD was less than 5 mg/L. From the above, it became clear that the charge acceptability was improved when the COD in the electrolyte solution was 5 mg/L or more and 160 mg/L or less.

Comparing C1-1 with E1-2 or E1-3 to E1-12, higher charge acceptability was obtained when the COD in the electrolyte solution was 130 mg/L or less or 100 mg/L or less. As shown in E1-4 to E1-12, when the COD in the electrolyte solution was 5 mg/L or more and 50 mg/L or less, higher charge acceptability was obtained, and as shown in E1-5 to E1-11, when the COD was 8 mg/L or more and 30 mg/L or less, particularly high charge acceptability was obtained.

In the above Examples and Comparative Examples, the results in the case of the lead-acid battery are shown; however, also in the case of the nickel-metal hydride battery or the nickel-cadmium battery, there is a tendency similar to the case of the lead-acid battery that the charge acceptability is improved by setting the COD in the electrolyte solution within a specific range.

<<Lead-acid batteries R2-1 to R2-10>>

Each lead-acid battery was produced by the following procedure.

(1) Preparation of separator

A resin composition containing polyethylene, silica particles, paraffin-based oil as a pore-forming additive, and a permeant was extrusion-molded into a sheet shape, and stretched, and then a portion of the pore-forming additive was removed to prepare a porous film including a rib on one surface. The cooling rate of the extrusion-molded sheet and the ratio of the stretching treatment were adjusted so that the degree of crystallinity (%) ($100 \times I_c/(I_c + I_a)$) of the porous film determined by the procedure described above was the value (13%) shown in Table 3.

The oil content of the porous film determined by the procedure described above was 11 to 18% by mass, and the content of the silica particles was 60% by mass.

The height of the rib determined by the procedure described above was 0.55 mm.

The thickness of the porous film (thickness of the base) determined by the procedure described above was unified to 0.2 mm.

Next, the sheet-shaped porous film was folded in two so that the rib was disposed on the inner surface to form a bag, and the overlapped both ends were press-bonded to obtain a bag-shaped porous film (size in a state of being placed flat: length 117 mm × width 152 mm). A pressure-bonding portion had a width of 3 mm inside a position of 2 mm from a side end of the porous film.

The degree of crystallinity of the porous film, the oil content, the content of silica particles, the thickness of the base, and the height of the rib are values obtained for the porous film before the production of the lead-acid battery, and were substantially the same as values measured by the procedure described above for the porous film taken out of the lead-acid battery after the production.

(2) Preparation of positive electrode plate

Lead oxide, a reinforcing material (synthetic resin fiber), water, and sulfuric acid were mixed to prepare a positive electrode paste. The positive electrode paste was filled in a mesh portion of an expanded grid made of an antimony-free Pb-Ca-Sn-based alloy, cured, and dried to obtain a non-formed positive electrode plate having a width of 137 mm, a height of 110 mm, and a thickness of 1.6 mm.

(3) Preparation of negative electrode plate

Lead oxide, carbon black, barium sulfate, lignin, a reinforcing material (synthetic resin fiber), water and sulfuric acid were mixed to prepare a negative electrode paste. The negative electrode paste was filled in a mesh portion of an expanded grid made of an antimony-free Pb-Ca-Sn-based alloy, cured, and dried to obtain a non-formed negative electrode plate having a width of 137 mm, a height of 110 mm, and a thickness of 1.3 mm. The amounts of the carbon black, the barium sulfate, the lignin, and the synthetic resin fiber used were adjusted so that the content of each component was 0.3% by mass, 2.1% by mass, 0.1% by mass, and 0.1% by mass, respectively, for the negative electrode plate taken out from the lead-acid battery in the full charge state.

(4) Preparation of lead-acid battery

The non-formed negative electrode plate was stored in a bag-shaped porous film of the separator. The negative electrode plate and the positive electrode plate were stacked with the separator interposed therebetween. In this way, an element was formed of seven non-formed negative electrode plates and six non-formed positive electrode plates.

Lug portions of the positive electrode plates and lug portions of the negative electrode plates were welded to the positive electrode shelf and the negative electrode shelf by a cast-on strap method. The element was inserted into a polypropylene container, and filled with an electrolyte solution, and formation was performed in the container to assemble a flooded-type lead-acid battery having a rated voltage of 12 V and a 5-hour rate capacity of 30 Ah. The 5-hour rate capacity means a capacity when discharging is performed at a current (A) of 1/5 of the numerical value of Ah described in the rated capacity. In the container, six elements are connected in series.

As the electrolyte solution, an aqueous sulfuric acid solution was used. The density of the electrolyte solution after the formation at 20°C was 1.285. The COD of the electrolyte solution taken out from the lead-acid battery in the full charge state was adjusted to be the value shown in Table 3 on a mass basis. The COD was controlled by changing the amount of permeant used in preparing the porous film.

<<Lead-acid batteries R2-11 and E2-1 to E2-9>>

A lead-acid battery was produced similarly to the lead-acid batteries R2-1 to R2-10 except that a porous film adjusted so that the degree of crystallinity (%) determined by the procedure described above was the value (18%) shown in Table 4 was used.

<<Lead-acid batteries E2-10 to E2-16>>

A lead-acid battery was produced similarly to the lead-acid batteries R2-4 to R2-10 except that a porous film adjusted so that the degree of crystallinity (%) determined by the procedure described above was the value (23%) shown in Table 5 was used.

<<Lead-acid batteries E2-17 to E2-23>>

A lead-acid battery was produced similarly to the lead-acid batteries R2-4 to R2-10 except that a porous film adjusted so that the degree of crystallinity (%) determined by the procedure described above was the value (25%) shown in Table 6 was used.

(5) Evaluation

The charge acceptability of the lead-acid battery and the life performance in the light load life test at 75°C were evaluated by the procedure described above. The charge acceptability was evaluated by a relative value when the evaluation result of the lead-acid battery R2-1 was 100, and the life performance in the light load life test was evaluated by a relative value when the number of life cycles of the lead-acid battery R2-1 was 100.

Tables 3 to 6 show the evaluation results. E2-1 to E2-23 correspond to examples. R2-1 to R2-11 correspond to comparative examples.

[Table 3]

| Battery | COD amount mg/L | Degree of crystallinity % | Charge acceptability | Light load life |
|---------|-----------------|---------------------------|----------------------|-----------------|
| R2-1 | 170 | 13 | 100 | 100 |
| R2-2 | 160 | 13 | 120 | 96 |
| R2-3 | 130 | 13 | 130 | 91 |
| R2-4 | 100 | 13 | 140 | 85 |

(continued)

| Battery | COD amount mg/L | Degree of crystallinity % | Charge acceptability | Light load life |
|---------|-----------------|---------------------------|----------------------|-----------------|
| R2-5 | 80 | 13 | 148 | 80 |
| R2-6 | 50 | 13 | 160 | 67 |
| R2-7 | 30 | 13 | 163 | 55 |
| R2-8 | 25 | 13 | 165 | 50 |
| R2-9 | 20 | 13 | 165 | 45 |
| R2-10 | 15 | 13 | 167 | 40 |

[Table 4]

| Battery | COD amount mg/L | Degree of crystallinity % | Charge acceptability | Light load life |
|---------|-----------------|---------------------------|----------------------|-----------------|
| R2-11 | 170 | 18 | 100 | 140 |
| E2-1 | 160 | 18 | 120 | 138 |
| E2-2 | 130 | 18 | 130 | 136 |
| E2-3 | 100 | 18 | 140 | 133 |
| E2-4 | 80 | 18 | 148 | 128 |
| E2-5 | 50 | 18 | 160 | 122 |
| E2-6 | 30 | 18 | 163 | 115 |
| E2-7 | 25 | 18 | 165 | 111 |
| E2-8 | 20 | 18 | 165 | 108 |
| E2-9 | 15 | 18 | 167 | 104 |

[Table 5]

| Battery | COD amount mg/L | Degree of crystallinity % | Charge acceptability | Light load life |
|---------|-----------------|---------------------------|----------------------|-----------------|
| E2-10 | 100 | 23 | 140 | 165 |
| E2-11 | 80 | 23 | 148 | 165 |
| E2-12 | 50 | 23 | 160 | 158 |
| E2-13 | 30 | 23 | 163 | 145 |
| E2-14 | 25 | 23 | 165 | 142 |
| E2-15 | 20 | 23 | 165 | 138 |
| E2-16 | 15 | 23 | 167 | 134 |

[Table 6]

| Battery | COD amount mg/L | Degree of crystallinity % | Charge acceptability | Light load life |
|---------|-----------------|---------------------------|----------------------|-----------------|
| E2-17 | 100 | 25 | 140 | 165 |
| E2-18 | 80 | 25 | 148 | 165 |
| E2-19 | 50 | 25 | 160 | 165 |
| E2-20 | 30 | 25 | 163 | 156 |
| E2-21 | 25 | 25 | 165 | 153 |
| E2-22 | 20 | 25 | 165 | 150 |
| E2-23 | 15 | 25 | 167 | 145 |

Comparing the batteries R2-1 and R2-11, when the COD is as large as 170 mg/L, the light load life performance is improved by 40% from 100% to 140% by increasing the degree of crystallinity from 13% to 18%. On the other hand, comparing the batteries R2-10 and E2-9, when the COD is as small as 15 mg/L, the light load life performance is improved by 64% from 40% to 104% by increasing the degree of crystallinity from 13% to 18%, and an improvement rate of 160% based on the degree of crystallinity of 13% is achieved. That is, the smaller the COD, the larger an improvement width of the light load life performance by improving the degree of crystallinity. The battery E2-9 has achieved a life performance of 104%, which is more than 100% of the battery R2-1. The same applies to the comparison between Table 3 and Tables 5 and 6.

It can be understood that when the degree of crystallinity is 23% or more, the COD is 80 mg/L or more, and when the degree of crystallinity is 25% or more, the COD is 50 mg/L or more, so that more excellent life performance can be stably obtained. This was presumed to be because the oxidation degradation of the porous film due to the reduction of the COD was suppressed by increasing the degree of crystallinity of the porous film, and the internal short-circuit was suppressed.

<<Lead-acid batteries E3-1 to E3-13>>

Lead-acid batteries E3-1 to E3-13 were produced by the following procedure.

(1) Preparation of separator

A resin composition containing polyethylene, silica particles, paraffin-based oil as a pore-forming additive, and a permeant was extrusion-molded into a sheet shape, and stretched, and then a portion of the pore-forming additive was removed to prepare a porous film including a rib on one surface.

The oil content of the porous film determined by the procedure described above was 11 to 18% by mass, and the content of the silica particles was 60% by mass.

The height of the rib determined by the procedure described above was 0.2 mm.

The thickness of the porous film (thickness of the base) determined by the procedure described above was unified to 0.2 mm.

Next, the sheet-shaped porous film was folded in two so that the rib was disposed on the inner surface to form a bag, and the overlapped both ends were press-bonded to obtain a bag-shaped porous film (size in a state of being placed flat: length 117 mm × width 152 mm). A pressure-bonding portion had a width of 3 mm inside a position of 2 mm from a side end of the porous film.

A glass fiber mat (size under atmospheric pressure: length 117 mm × width 143 mm, thickness: 50 $\mu$m, average fiber diameter: 17 $\mu$m, area density: 10 g/m$^2$, porosity: 80%, average pore diameter: 70 $\mu$m) was attached to both outer surfaces of the bag-shaped porous film with an adhesive as shown in Fig. 2. A lateral width of the porous film was larger than a lateral width of the glass fiber mat, and a region where the glass fiber mat did not overlap was formed with a width of 4.5 mm at both side ends of the porous film.

The ratio R of the porous film, the oil content, the content of silica particles, the thickness of the base, the height of the rib, the size of the glass fiber mat, the average fiber diameter, and the area density are values obtained for the porous film or the glass fiber mat before the production of the lead-acid battery, and are substantially the same as values measured by the procedure described above for the porous film or the glass fiber mat taken out of the lead-acid battery after the production.

(2) Preparation of positive electrode plate

Lead oxide, a reinforcing material (synthetic resin fiber), water, and sulfuric acid were mixed to prepare a positive electrode paste. The positive electrode paste was filled in a mesh portion of an expanded grid made of an antimony-free Pb-Ca-Sn-based alloy, cured, and dried to obtain a non-formed positive electrode plate having a width of 137 mm, a height of 110 mm, and a thickness of 1.6 mm.

(3) Preparation of negative electrode plate

Lead oxide, carbon black, barium sulfate, lignin, a reinforcing material (synthetic resin fiber), water and sulfuric acid were mixed to prepare a negative electrode paste. The negative electrode paste was filled in a mesh portion of an expanded grid made of an antimony-free Pb-Ca-Sn-based alloy, cured, and dried to obtain a non-formed negative electrode plate having a width of 137 mm, a height of 110 mm, and a thickness of 1.3 mm. The amounts of the carbon black, the barium sulfate, the lignin, and the synthetic resin fiber used were adjusted so that the content of each component was 0.3% by mass, 2.1% by mass, 0.1% by mass, and 0.1% by mass, respectively, for the negative electrode plate taken out from the lead-acid battery in the full charge state.

(4) Preparation of lead-acid battery

The non-formed negative electrode plate was stored in a bag-shaped porous film of the separator. The negative electrode plate and the positive electrode plate were stacked with the separator interposed therebetween such that the glass fiber mats attached to both outer surfaces of the bag were in contact with the positive electrode plate. In this way, an element was formed of seven non-formed negative electrode plates and six non-formed positive electrode plates.

Lug portions of the positive electrode plates and lug portions of the negative electrode plates were welded to the positive electrode shelf and the negative electrode shelf by a cast-on strap method. The element was inserted into a polypropylene container, and filled with an electrolyte solution, and formation was performed in the container to assemble a flooded-type lead-acid battery having a rated voltage of 12 V and a 5-hour rate capacity of 30 Ah. The 5-hour rate capacity is a capacity when discharging is performed at a current (A) of 1/5 of the numerical value of Ah described in the rated capacity. In the container, six elements are connected in series.

As the electrolyte solution, an aqueous sulfuric acid solution was used. The density of the electrolyte solution after the formation at 20°C was 1.285. The COD of the electrolyte solution taken out from the lead-acid battery in the full charge state was adjusted to be the value shown in Table 7 on a mass basis. The COD was controlled by the amount of the permeant used in preparing the porous film, a washing state of the expanded grid of the positive electrode plate and the negative electrode plate, and the like.

<<Lead-acid batteries R3-1 to R3-15>>

A lead-acid battery was produced similarly to the lead-acid batteries E3-1 to E3-13 except that no glass fiber mat was attached to both outer surfaces of the bag-shaped porous film in (1) Preparation of separator.

(5) Evaluation

The CCA performance and the heavy load life performance of the lead-acid battery were evaluated by the procedure described above. The heavy load life performance was evaluated by the procedure described above for the lead-acid battery once fully charged. The CCA performance was evaluated by a relative value when the terminal voltage at 30 seconds point of the lead-acid battery R3-15 was 100, and the heavy load life performance was evaluated by a relative value when the number of life cycles of the lead-acid battery R3-8 was 100.

Table 7 shows the evaluation results. E3-1 to E3-13 correspond to examples. R3-1 to R3-15 correspond to comparative examples.

[Table 7]

| Battery | Nonwoven fabric | COD amount mg/L | CCA | Heavy load life |
|---|---|---|---|---|
| R3-1 | Absent | 170 | 108 | 70 |
| R3-2 | Absent | 160 | 115 | 75 |
| R3-3 | Absent | 130 | 116 | 83 |
| R3-4 | Absent | 100 | 119 | 88 |
| R3-5 | Absent | 50 | 123 | 90 |
| R3-6 | Absent | 30 | 127 | 94 |
| R3-7 | Absent | 25 | 126 | 96 |
| R3-8 | Absent | 20 | 127 | 100 |
| R3-9 | Absent | 15 | 129 | 99 |
| R3-10 | Absent | 10 | 128 | 98 |
| R3-11 | Absent | 8 | 125 | 95 |
| R3-12 | Absent | 5 | 123 | 84 |
| R3-13 | Absent | 3 | 125 | 72 |
| R3-14 | Absent | 1 | 126 | 63 |
| R3-15 | Present | 170 | 100 | 80 |
| E3-1 | Present | 160 | 108 | 110 |
| E3-2 | Present | 130 | 109 | 119 |

(continued)

| Battery | Nonwoven fabric | COD amount mg/L | CCA | Heavy load life |
|---------|-----------------|-----------------|-----|-----------------|
| E3-3 | Present | 100 | 111 | 124 |
| E3-4 | Present | 50 | 118 | 138 |
| E3-5 | Present | 30 | 119 | 155 |
| E3-6 | Present | 25 | 119 | 161 |
| E3-7 | Present | 20 | 117 | 161 |
| E3-8 | Present | 15 | 119 | 160 |
| E3-9 | Present | 10 | 115 | 158 |
| E3-10 | Present | 8 | 116 | 150 |
| E3-11 | Present | 5 | 115 | 128 |
| E3-12 | Present | 3 | 118 | 114 |
| E3-13 | Present | 1 | 116 | 110 |

As shown in Table 7, when the nonwoven fabric was not used, the heavy load life performance was insufficient regardless of the COD. This was because the softening and falling off of the positive electrode material could not be suppressed regardless of the control of the COD. In particular, when the COD was 5 mg/L or less, particularly 1 mg/L, oxygen was generated on the positive electrode, and the porous film was damaged due to oxidation degradation, so that the heavy load life performance was further deteriorated.

On the other hand, when the nonwoven fabric was used, the CCA performance and the heavy load life performance were remarkably improved by the control of the COD. That is, when the COD was 160 mg/L or less, the CCA performance and the heavy load life performance were remarkably improved. However, when the COD was 5 mg/L or less, particularly 1 mg/L, the heavy load life performance was deteriorated. This was considered to be because the COD in the electrolyte solution was too small, so that the porous film was damaged by oxygen generated on the positive electrode.

<<Lead-acid batteries A4-1 to A4-24 and CA4-1 to CA4-15>>

(1) Preparation of positive electrode plate

Lead oxide, a reinforcing material (synthetic resin fiber), water, and sulfuric acid were mixed to prepare a positive electrode paste. The positive electrode paste was filled in a mesh portion of an expanded grid made of an antimony-free Pb-Ca-Sn-based alloy, cured, and dried to obtain a non-formed positive electrode plate having a width of 137.5 mm, a height of 110 mm, and a thickness of 1.6 mm.

(2) Preparation of negative electrode plate

Lead oxide, bismuth sulfate ($Bi_2(SO_4)_3$), carbon black, barium sulfate, lignin, water, and sulfuric acid were mixed to prepare a negative electrode paste. The negative electrode paste was filled in a mesh portion of an expanded grid made of an antimony-free Pb-Ca-Sn-based alloy, cured, and dried to obtain a non-formed negative electrode plate having a width of 137.5 mm, a height of 110 mm, and a thickness of 1.3 mm. The amount of bismuth sulfate used was adjusted so that the content of the Bi element in the negative electrode plate taken out from the lead-acid battery in the full charge state was the value shown in Table 8 on a mass basis. The amounts of the carbon black, the barium sulfate, and the lignin used were adjusted so that the content of each component was 0.3% by mass, 2.1% by mass, and 0.1% by mass, respectively, for the negative electrode plate taken out from the lead-acid battery in the full charge state.

(3) Preparation of separator

A resin composition containing 100 parts by mass of polyethylene, 160 parts by mass of silica particles, paraffin-based oil as a predetermined amount of a pore-forming additive, and a predetermined amount of a permeant was extrusion-molded into a sheet shape, and stretched, and then a portion of the pore-forming additive was removed to obtain a separator including a rib on one surface.

The oil content of the separator determined by the procedure described above was 11 to 18% by mass, and the content of the silica particles was 60% by mass. The height of the rib determined by the procedure described above was 0.60 mm. The thickness of the separator (thickness of the base) determined by the procedure described above was 0.20 mm.

The sheet-shaped separator obtained by the above procedure was folded in two so that the rib was disposed on the outer surface to form a bag. Next, the overlapped both ends were pressure-bonded to obtain a bag-shaped separator.

The oil content of the separator, the content of silica particles, the thickness of the separator, and the height of the rib are values obtained for the separator before the production of the lead-acid battery. These values are almost the same as the values measured by the procedure described above for the separator taken out from the produced lead-acid battery.

(4) Preparation of lead-acid battery

The non-formed negative electrode plate was stored in a bag-shaped separator, and stacked with the positive electrode plate, and an element was formed of seven non-formed negative electrode plates and six non-formed positive electrode plates. The ratio of the mass of the positive electrode material to the mass of the negative electrode material: Mp/Mn was 1.3.

Lug portions of the positive electrode plates and lug portions of the negative electrode plates were welded to the positive electrode shelf and the negative electrode shelf by a cast-on strap (COS) method. The element was inserted into a polypropylene container, and filled with an electrolyte solution, and formation was performed in the container to assemble a flooded-type lead-acid battery having a rated voltage of 12 V and a 5-hour rate capacity of 30 Ah. Here, the 5-hour rate capacity is a capacity when discharging is performed at the current (A) of 1/5 of the numerical value of Ah described in the rated capacity. In the container, six elements are connected in series.

As the electrolyte solution, an aqueous sulfuric acid solution was used. The density of the electrolyte solution after the formation at 20°C was 1.285. The COD of the electrolyte solution taken out from the lead-acid battery in the full charge state was adjusted to be the value shown in Table 8 on a mass basis. The COD was controlled by the amount of the permeant of the separator in preparing the separator, the washing state of the expanded grid of the positive electrode plate and the negative electrode plate, and the like.

The heavy load life test is performed by the procedure described above using the obtained lead-acid battery, and the life performance is evaluated. The life performance is evaluated by a relative value of the number of cycles N until the life is reached. The relative value of the number of cycles N is a value when the number of cycles N of the lead-acid battery CA4-4 is 100. Table 8 shows the results of the lead-acid batteries A4-1 to A4-24 and CA4-1 to CA4-15. A4-1 to A4-24 correspond to examples, and CA4-1 to CA4-15 correspond to comparative examples.

[Table 8]

| Battery | Bi content (ppm) | COD mg/L | Heavy load life | Remarks |
|---------|------------------|----------|-----------------|---------|
| CA4-1 | 50 | 1 | 102 | Poor charged state |
| CA4-2 | 50 | 8 | 103 | Poor charged state |
| CA4-3 | 50 | 100 | 100 | Poor charged state |
| CA4-4 | 50 | 170 | 100 | Poor charged state |
| CA4-5 | 80 | 1 | 102 | Poor charged state |
| CA4-6 | 80 | 8 | 101 | Poor charged state |
| CA4-7 | 80 | 100 | 100 | Poor charged state |
| CA4-8 | 80 | 170 | 100 | Poor charged state |
| A4-1 | 100 | 1 | 115 | Slightly uneven reaction |
| A4-2 | 100 | 5 | 139 | |
| A4-3 | 100 | 8 | 142 | |
| A4-4 | 100 | 20 | 144 | |
| A4-5 | 100 | 50 | 135 | |
| A4-6 | 100 | 100 | 130 | |
| A4-7 | 100 | 120 | 122 | |
| A4-8 | 100 | 160 | 110 | Slightly poor charged state |
| CA4-9 | 100 | 170 | 99 | Poor charged state |

(continued)

| Battery | Bi content (ppm) | COD mg/L | Heavy load life | Remarks |
|---|---|---|---|---|
| A4-9 | 200 | 1 | 113 | Slightly uneven reaction |
| A4-10 | 200 | 5 | 141 | |
| A4-11 | 200 | 8 | 145 | |
| A4-12 | 200 | 20 | 147 | |
| A4-13 | 200 | 50 | 138 | |
| A4-14 | 200 | 100 | 134 | |
| A4-15 | 200 | 120 | 121 | |
| A4-16 | 200 | 160 | 109 | Slightly poor charged state |
| CA4-10 | 200 | 170 | 101 | Poor charged state |
| A4-17 | 300 | 1 | 110 | Slightly uneven reaction |
| A4-18 | 300 | 5 | 143 | |
| A4-19 | 300 | 8 | 150 | |
| A4-20 | 300 | 20 | 152 | |
| A4-21 | 300 | 50 | 142 | |
| A4-22 | 300 | 100 | 135 | |
| A4-23 | 300 | 120 | 125 | |
| A4-24 | 300 | 160 | 111 | Slightly poor charged state |
| CA4-11 | 300 | 170 | 90 | Poor charged state |
| CA4-12 | 350 | 1 | 95 | Uneven reaction |
| CA4-13 | 350 | 8 | 93 | Uneven reaction |
| CA4-14 | 350 | 100 | 90 | Uneven reaction |
| CA4-15 | 350 | 170 | 70 | Poor charged state |

As shown in Table 8, when the content of the Bi element in the negative electrode material is 100 to 300 ppm and the COD is 160 mg/L or less, the life in the heavy load life test is good, and when the COD is 15 mg/L or more or 8 mg/L or more, the improvement of the life is remarkable. When the COD in the electrolyte solution is 120 mg/L or less, 100 mg/L or less, or 50 mg/L or less, the improvement of the life is remarkable.

<<Lead-acid batteries 4-25 to A4-28>>

Lead-acid batteries A4-25 to A4-28 were produced and evaluated similarly to the lead-acid battery A4-12 except that the Mp/Mn ratio was changed as shown in Table 9.

[Table 9]

| Battery | Bi content (ppm) | COD mg/L | Mp/Mn ratio | Heavy load life |
|---|---|---|---|---|
| A4-25 | 200 | 20 | 1.1 | 117 |
| A4-26 | 200 | 20 | 1.2 | 142 |
| A4-12 | 200 | 20 | 1.3 | 147 |
| A4-27 | 200 | 20 | 1.4 | 140 |
| A4-28 | 200 | 20 | 1.5 | 114 |

As shown in Table 9, when the Mp/Mn ratio was 1.2 to 1.4, the life performance was significantly improved.

INDUSTRIAL APPLICABILITY

In the aqueous electrolyte secondary battery according to one aspect of the present invention, high charge acceptability is obtained, and a charge-discharge reaction can be smoothly performed. Examples of such an aqueous electrolyte secondary battery include a lead-acid battery, a nickel-metal hydride battery, and a nickel-cadmium battery. Each battery can be used for various applications. For example, the lead-acid battery is suitable for an idling stop (also referred to as start-stop or idle reduction) application, power sources for starting various vehicles, and the like. The idling stop application includes, for example, a lead-acid battery for an idling stop system vehicle. Examples of the vehicle include an automobile and a motorcycle. The lead-acid battery can also be suitably used for a power supply of an industrial energy storage apparatus and the like. Examples of the industrial energy storage apparatus include a power source of an electric vehicle such as a forklift. These applications are merely examples. The application of the aqueous electrolyte secondary battery according to the above aspect of the present invention is not limited thereto.

DESCRIPTION OF REFERENCE SIGNS

1: lead-acid battery
2: negative electrode plate
3: positive electrode plate
4: separator
5: positive electrode shelf
6: negative electrode shelf
7: positive pole
8: penetrating connection body
9: negative pole
11: element
12: container
13: partition
14: cell chamber
15: lid
16: negative electrode terminal
17: positive electrode terminal
18: vent plug

**Claims**

1. An aqueous electrolyte secondary battery comprising:

   an element; and
   an aqueous electrolyte solution,
   wherein the element includes a positive electrode plate, a negative electrode plate, and a separator interposed between the positive electrode plate and the negative electrode plate, and a chemical oxygen demand in the aqueous electrolyte solution is 5 mg/L or more and 160 mg/L or less.

2. The aqueous electrolyte secondary battery according to claim 1, wherein the chemical oxygen demand in the aqueous electrolyte solution is 130 mg/L or less.

3. The aqueous electrolyte secondary battery according to claim 1 or 2, wherein the chemical oxygen demand in the aqueous electrolyte solution is 8 mg/L or more.

4. The aqueous electrolyte secondary battery according to claim 1, which is a lead-acid battery.

5. The aqueous electrolyte secondary battery according to claim 4, wherein the negative electrode plate contains at least one selected from the group consisting of an organic expander and a carbonaceous material.

6. The aqueous electrolyte secondary battery according to claim 4 or 5, wherein the element includes a fiber mat interposed between the positive electrode plate and the negative electrode plate.

7. The aqueous electrolyte secondary battery according to claim 4, wherein the separator includes a resin porous film, the porous film includes a crystalline region and an amorphous region, in an X-ray diffraction spectrum of the porous film, a degree of crystallinity represented by $100 \times I_c/(I_c + I_a)$ is 18% or more, $I_c$ is an integrated intensity of a diffraction peak having a maximum peak height among diffraction peaks corresponding to the crystalline region, and $I_a$ is an integrated intensity of a halo corresponding to the amorphous region.

8. The aqueous electrolyte secondary battery according to claim 7, wherein the chemical oxygen demand is 15 mg/L or more.

9. The aqueous electrolyte secondary battery according to claim 7, wherein the degree of crystallinity is 40% or less.

10. The aqueous electrolyte secondary battery according to claim 4, wherein the separator includes a resin porous film and a nonwoven fabric in contact with the positive electrode plate.

11. The aqueous electrolyte secondary battery according to claim 10, wherein the nonwoven fabric is a mat including at least one selected from the group consisting of glass fiber and organic fiber.

12. The aqueous electrolyte secondary battery according to claim 7 or 10, wherein the chemical oxygen demand is 100 mg/L or less.

13. The aqueous electrolyte secondary battery according to claim 10, wherein the nonwoven fabric is fixed to a surface of the positive electrode plate.

14. The aqueous electrolyte secondary battery according to claim 7 or 10, wherein the porous film has a thickness of 100 μm or more and 300 μm or less.

15. The aqueous electrolyte secondary battery according to claim 10, wherein the nonwoven fabric has a thickness of 30 μm or more and 800 μm or less.

16. The aqueous electrolyte secondary battery according to claim 10, wherein the porous film has a region not covered with the nonwoven fabric on at least a portion of an end.

17. The aqueous electrolyte secondary battery according to claim 4, wherein the positive electrode plate contains a positive electrode material, the negative electrode plate contains a negative electrode material, the negative electrode material contains a Bi element, and a content of the Bi element in the negative electrode material is 100 ppm or more and 300 ppm or less on a mass basis.

18. The aqueous electrolyte secondary battery according to claim 17, wherein the chemical oxygen demand in the aqueous electrolyte solution is 120 mg/L or less.

19. The aqueous electrolyte secondary battery according to claim 17, wherein a ratio of a mass of the positive electrode material to a mass of the negative electrode material is 1.2 or more and 1.4 or less.

20. The aqueous electrolyte secondary battery according to any one of claims 17 to 19, which is used for a vehicle that is controlled by idling stop/start.

Fig. 1

Fig. 2

## INTERNATIONAL SEARCH REPORT

| International application No. |
|---|
| **PCT/JP2023/030110** |

### A. CLASSIFICATION OF SUBJECT MATTER

**H01M 10/08**(2006.01)i; **H01M 4/14**(2006.01)i; **H01M 4/62**(2006.01)i; **H01M 10/06**(2006.01)i; **H01M 10/26**(2006.01)i; **H01M 50/414**(2021.01)i; **H01M 50/437**(2021.01)i; **H01M 50/44**(2021.01)i; **H01M 50/449**(2021.01)i; **H01M 50/454**(2021.01)i; **H01M 50/46**(2021.01)i; **H01M 50/489**(2021.01)i

FI: H01M10/08; H01M4/14 Q; H01M4/62 B; H01M10/06 L; H01M10/26; H01M50/414; H01M50/437; H01M50/44; H01M50/449; H01M50/454; H01M50/46; H01M50/489

According to International Patent Classification (IPC) or to both national classification and IPC

### B. FIELDS SEARCHED

Minimum documentation searched (classification system followed by classification symbols)

H01M10/08; H01M4/14; H01M4/62; H01M10/06; H01M10/26; H01M50/414; H01M50/437; H01M50/44; H01M50/449; H01M50/454; H01M50/46; H01M50/489

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2019-505969 A (DARAMIC, LLC) 28 February 2019 (2019-02-28) paragraph [0067], fig. 5 | 1-20 |
| A | JP 2000-106162 A (JAPAN VILENE CO., LTD.) 11 April 2000 (2000-04-11) paragraph [0020] | 1-20 |
| A | JP 2021-163612 A (THE FURUKAWA BATTERY CO., LTD.) 11 October 2021 (2021-10-11) claim 1 | 1-20 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **06 November 2023** | **14 November 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2023/030110**

| Patent document cited in search report | | | Publication date (day/month/year) | Patent family member(s) | | | Publication date (day/month/year) |
|---|---|---|---|---|---|---|---|
| JP | 2019-505969 | A | 28 February 2019 | US paragraph [0086], fig. 5<br>WO<br>EP<br>KR<br>CN | 2019/0058175<br>2017/143212<br>3417496<br>10-2018-0108849<br>108886123 | A1<br>A1<br>A1<br>A<br>A | |
| JP | 2000-106162 | A | 11 April 2000 | US column 8, lines 42-51<br>EP<br>CN | 6348286<br>1073131<br>1282986 | B1<br>A2<br>A | |
| JP | 2021-163612 | A | 11 October 2021 | (Family: none) | | | |

Form PCT/ISA/210 (patent family annex) (January 2015)

**EP 4 550 517 A1**

**REFERENCES CITED IN THE DESCRIPTION**

**Patent documents cited in the description**

- WO 2017143212 A
- JP 2005251394 A
- JP 2019514173 W
- JP 2001338631 A
- JP 2013084362 A
- WO 2018105134 A
- JP 2020174058 A
- JP 2021163612 A
- JP 2006079973 A
- JP 2003142085 A